# EUROPEAN PATENT APPLICATION

(11) **EP 4 468 766 A1**
(43) Date of publication of application: **27.11.2024**
(21) Application number: 23759337.1
(22) Date of filing: 28.02.2023
(51) Int. Cl.: H04W 12/106

(54) **CELL HANDOVER METHOD AND APPARATUS**

(30) Priority: 28.02.2022 CN 202210191668
(71) Applicant: Huawei Technologies Co., Ltd., Shenzhen, Guangdong 518129 (CN)
(72) Inventor: GUO, Longhua, Shenzhen, Guangdong 518129 (CN); WU, Rong, Shenzhen, Guangdong 518129 (CN); NIEMI, Valtteri, 00014 Helsinki (FI)
(74) Representative: Goddar, Heinz J.
(86) International application number: PCT/CN2023/078571
(87) International publication number: WO 2023/160716

(57) **Abstract**

This application provides a cell handover method and apparatus. The method may include: A terminal device receives a physical layer parameter and system information for a candidate cell, and then measures signal strength of the candidate cell based on the physical layer parameter. The terminal device sends a measurement result and signature obtaining indication information and/or signature check result indication information to an access network device, where the signature obtaining indication information indicates whether the system information carries a signature, and the signature check result indication information indicates whether signature check succeeds. In the foregoing solution, the terminal device may indicate, to the access network device, whether the system information for the candidate cell carries the signature and/or whether the signature check of the system information succeeds, so that the access network device can determine, based on information reported by the terminal device, a cell to which the terminal device is to be handed over, thereby preventing the terminal device from being handed over to a false base station, and improving communication security.

## Description

This application claims priority to Chinese Patent Application No. 202210191668.3, filed with the China National Intellectual Property Administration on February 28, 2022 and entitled "CELL HANDOVER METHOD AND APPARATUS", which is incorporated herein by reference in its entirety.

### TECHNICAL FIELD

This application relates to the field of communication technologies, and in particular, to a cell handover method and apparatus.

### BACKGROUND

In a wireless communication system, radio resource control (radio resource control, RRC) signaling or user plane data may be sent between a user equipment (user equipment, UE) and a base station. However, an attacker may deploy a false base station between the UE and the base station to launch an attack. For example, during cell handover of the UE, the attacker may disguise the false base station as a cell of a real base station near the UE, to broadcast system information to the UE, and change content such as cell selection information in a system information block 1 (system information block 1, SIB 1) in the system information, so as to make it easier for the UE to camp on the false base station.

Once the UE camps on the false base station, the false base station may attack the UE through eavesdropping, tampering, forging, injection, air interface message release, or the like, posing a great threat to communication security of the UE. Therefore, how to improve security performance of the UE during cell handover is a problem that needs to be considered currently.

### SUMMARY

This application provides a cell handover method and apparatus, to improve security performance of a terminal device in a cell handover process.

According to a first aspect, a cell handover method is provided. The method includes: A terminal device receives a physical layer parameter and system information for a candidate cell, where the system information includes an identifier of the candidate cell. The terminal device measures signal strength of the candidate cell based on the physical layer parameter, to obtain a measurement result. The terminal device sends a measurement report to an access network device, where the measurement report includes the measurement result and one or both of the following information: signature obtaining indication information and signature check result indication information, where the signature obtaining indication information indicates whether the system information carries a signature, the signature check result indication information indicates whether signature check succeeds, and the signature is used to verify whether the system information is forged or tampered with.

Based on the foregoing solution, when reporting the measurement result of the candidate cell to the access network device, the terminal device may indicate, to the access network device, whether the system information for the candidate cell carries the signature of the system information and/or whether the signature check of the system information for the candidate cell succeeds, so that the access network device can hand over the terminal device to a valid cell as much as possible based on information reported by the terminal device, to improve security performance of the terminal device in a cell handover process.

With reference to the first aspect, in some implementations of the first aspect, the method further includes: When the system information carries the signature, the terminal device checks the signature.

Based on the foregoing solution, the terminal device may check the signature carried in the system information, to verify whether the candidate cell is trusted, to prevent the terminal device from being handed over to a false base station, and improve communication security.

With reference to the first aspect, in some implementations of the first aspect, when the signature check succeeds, the measurement report includes the measurement result and the signature check result indication information, and the signature check result indication information indicates that the signature check succeeds.

Based on the foregoing solution, when the signature check succeeds, the terminal device reports the measurement result of the candidate cell to the access network device, and indicates, by using the signature check result indication information, that the signature check of the system information for the candidate cell succeeds. In this implementation, the access network device may determine that the candidate cell is a trusted cell, or the terminal device may be handed over to the candidate cell, so that the terminal device can be prevented from being handed over to the false base station.

With reference to the first aspect, in some implementations of the first aspect, when the signature check fails, the measurement report includes the measurement result and the signature check result indication information, and the signature check result indication information indicates that the signature check fails.

Based on the foregoing solution, the terminal device may indicate, to the access network device by using the signature check result indication information, that the signature check of the system information for the candidate cell fails. In this implementation, the access network device may determine that the candidate cell is an untrusted cell, or the terminal device cannot be handed over to the candidate cell, so that the terminal device can be prevented from being handed over to the false base station.

With reference to the first aspect, in some implementations of the first aspect, the measurement report further includes the signature obtaining indication information, and the signature obtaining indication information indicates that the system information carries the signature. With reference to the first aspect, in some implementations of the first aspect, when the system information does not carry the signature, the measurement report includes the measurement result and the signature obtaining indication information, and the signature obtaining indication information indicates that the system information does not carry the signature.

Based on the foregoing solution, when the system information for the candidate cell does not carry the signature, the terminal device may report the measurement result of the candidate cell, and indicate, to the access network device by using the signature obtaining indication information, that the system information does not carry the signature, so that the terminal device can be handed over to the candidate cell when a base station in which the candidate cell is located is not upgraded.

With reference to the first aspect, in some implementations of the first aspect, the method further includes: The terminal device receives signature check indication information from the access network device. The signature check indication information indicates any one of the following: the terminal device to check the signature carried in the received system information; the terminal device to report a signature check result to the access network device; that the access network device supports determining a cell handover policy based on a signature check result; or that the access network device has been upgraded.

With reference to the first aspect, in some implementations of the first aspect, the method further includes: The terminal device checks, based on the signature check indication information, whether the system information carries the signature.

Based on the foregoing solution, when the terminal device receives the signature check indication information from the access network device, the terminal device may determine that the access network device supports determining the cell handover policy based on the signature check result, or the terminal device may determine that the access network device has been upgraded. Based on this, the terminal device may check whether the system information carries the signature, and check the signature when the system information carries the signature. In other words, if the terminal device does not receive the signature check indication information from the access network device, the terminal device may determine that the access network device is not upgraded, or the access network device does not support determining the cell handover policy based on the signature check result. In this case, the terminal device may not need to check whether the system information for the candidate cell carries the signature, or the terminal device may not need to check the signature carried in the system information, to reduce energy consumption of the terminal device.

With reference to the first aspect, in some implementations of the first aspect, the method further includes: The terminal device determines, based on the signature check indication information, that the measurement report includes one or both of the following information: the signature obtaining indication information and the signature check result indication information.

Based on the foregoing solution, when the terminal device receives the signature check indication information from the access network device, the terminal device may determine that the access network device supports determining the cell handover policy based on the signature check result, or the terminal device may determine that the access network device has been upgraded. Based on this, the terminal device may not include the signature obtaining indication information and/or the signature check result indication information in the measurement report. In this case, the terminal device may perform a subsequent solution based on a procedure specified in an existing protocol. Alternatively, the terminal device checks the signature carried in the system information, and when the signature check succeeds, and the measurement result meets a reporting criterion, the terminal device sends the measurement result of the candidate cell to the access network device.

According to a second aspect, a cell handover method is provided. The method includes: An access network device receives a measurement report for a candidate cell from a terminal device, where the measurement report includes a measurement result of signal strength of the candidate cell and one or both of the following information: signature obtaining indication information and signature check result indication information, where the signature obtaining indication information indicates whether system information for the candidate cell carries a signature, the signature check result indication information indicates whether signature check succeeds, and the signature is used to verify whether the system information for the candidate cell is forged or tampered with. The access network device determines, based on the measurement report for the candidate cell, whether to hand over the terminal device from a serving cell to the candidate cell.

Based on the foregoing solution, the access network device may determine, based on the measurement result of the candidate cell, a case of whether the system information for the candidate cell carries the signature, and/or a signature check result, whether to hand over the terminal device from the serving cell to the candidate cell, to prevent the terminal device from being handed over to a false base station, or reduce a probability of handing over the terminal device to a false base station, and improve communication security.

With reference to the second aspect, in some implementations of the second aspect, when the measurement report includes the measurement result and the signature obtaining indication information, that the access network device determines, based on the measurement report for the candidate cell, whether to hand over the terminal device from a serving cell to the candidate cell includes: The access network device determines whether the signature obtaining indication information matches signing capability information of the candidate cell, where the signing capability information indicates whether the candidate cell supports signing the system information. When the signature obtaining indication information matches the signing capability information, and the measurement result of the candidate cell meets a handover condition, the access network device determines to hand over the terminal device from the serving cell to the candidate cell.

Based on the foregoing solution, when the signing capability information of the candidate cell matches the signature obtaining indication information, and the measurement report for the candidate cell meets the handover condition, the access network device determines to hand over the terminal device from the serving cell to the candidate cell. In other words, when the signing capability information of the candidate cell does not match the signature obtaining indication information, or the measurement report for the candidate cell does not meet the handover condition, the access network device determines not to hand over the terminal device from the serving cell to the candidate cell, to prevent the terminal device from being handed over to the false base station.

With reference to the second aspect, in some implementations of the second aspect, that the access network device determines whether the signature obtaining indication information matches signing capability information of the candidate cell includes one or more of the following cases: When the signature obtaining indication information indicates that the system information carries the signature, and the signing capability information indicates that the candidate cell supports signing the system information, the access network device determines that the signature obtaining indication information matches the signing capability information of the candidate cell; when the signature obtaining indication information indicates that the system information does not carry the signature, and the signing capability information indicates that the candidate cell does not support signing the system information, the access network device determines that the signature obtaining indication information matches the signing capability information of the candidate cell; when the signature obtaining indication information indicates that the system information carries the signature, but the signing capability information indicates that the candidate cell does not support signing the system information, the access network device determines that the signature obtaining indication information does not match the signing capability information of the candidate cell; or when the signature obtaining indication information indicates that the system information does not carry the signature, but the signing capability information indicates that the candidate cell supports signing the system information, the access network device determines that the signature obtaining indication information does not match the signing capability information of the candidate cell.

With reference to the second aspect, in some implementations of the second aspect, the method further includes: The access network device obtains the signing capability information of the candidate cell by using local configuration information; or the access network device sends a request message to a network management system, where the request message includes an identifier of the candidate cell, and the request message is used to request to obtain the signing capability information corresponding to the candidate cell; and the access network device receives a response message from the network management system, where the response message includes the signing capability information.

Based on the foregoing solution, the access network device may obtain the signing capability information of the candidate cell, to determine, based on the signing capability information, whether the terminal device can be handed over to the candidate cell, to reduce the probability that the terminal device camps on the false base station, and improve communication security.

With reference to the second aspect, in some implementations of the second aspect, when the measurement report includes the measurement result and the signature check result indication information, that the access network device determines, based on the measurement report for the candidate cell, whether to hand over the terminal device from a serving cell to the candidate cell includes: When the signature check result indication information indicates that the signature check of the candidate cell succeeds, and the measurement result of the candidate cell meets the handover condition, the access network device determines to hand over the terminal device from the serving cell to the candidate cell.

Based on the foregoing solution, when the access network device receives the signature check result indication information from the terminal device, when a signature check result indicates that the signature check succeeds, the access network device may determine to hand over the terminal device to the candidate cell; or when a signature check result indicates that the signature check fails, the access network device may determine not to hand over the terminal device to the candidate cell, so that the terminal device can be prevented from being handed over to the false base station.

With reference to the second aspect, in some implementations of the second aspect, the method further includes: The access network device sends signature check indication information to the terminal device. The signature check indication information indicates any one of the following: the terminal device to check the signature carried in the received system information; the terminal device to report a signature check result to the access network device; that the access network device supports determining a handover policy for the candidate cell based on a signature check result; or that the access network device has been upgraded.

Based on the foregoing solution, the access network device may send the signature check indication information to the terminal device, so that the terminal device reports the signature obtaining indication information and/or the signature check result indication information when reporting the measurement report for the candidate cell, and the access network device can determine, based on the information, whether to hand over the terminal device to the candidate cell, to reduce the probability that the terminal device camps on the false base station, and improve communication security.

According to a third aspect, a cell handover method is provided. The method includes: A terminal device receives signing capability information from an access network device, where the signing capability information indicates whether a candidate cell supports signing system information. The terminal device receives a physical layer parameter and the system information for the candidate cell, where the system information includes an identifier of the candidate cell. The terminal device measures signal strength of the candidate cell based on the physical layer parameter, to obtain a measurement result. The terminal device determines whether the signing capability information matches a case of whether the system information carries a signature. When the signing capability information does not match the case of whether the system information carries the signature, the terminal device skips sending the measurement result to the access network device.

Based on the foregoing solution, the terminal device may determine, based on a case of whether a signature is carried in a broadcast message for the candidate cell, and the signing capability information of the candidate cell and/or a signature check result of the candidate cell, whether a measurement report for the candidate cell can be reported, to reduce a probability that the terminal device camps on a false base station, and improve communication security of the terminal.

With reference to the third aspect, in some implementations of the third aspect, the method further includes: When the system information carries the signature, the terminal device checks the signature carried in the system information.

Based on the foregoing solution, the terminal device may check the signature carried in the system information, to verify whether the candidate cell is trusted, to prevent the terminal device from camping on the false base station, and improve communication security.

With reference to the third aspect, in some implementations of the third aspect, that the terminal device determines whether the signing capability information matches a case of whether the system information carries a signature includes: When the signing capability information indicates that the candidate cell supports signing the system information, and the system information carries the signature, the terminal device determines that the signing capability information matches the case of whether the system information carries the signature.

With reference to the third aspect, in some implementations of the third aspect, the method further includes: When the signing capability information matches the case of whether the system information carries the signature, and the signature check succeeds, the terminal device sends the measurement result to the access network device.

Based on the third aspect and the foregoing two possible implementations of the third aspect, when the signing capability information matches the case of whether the system information carries the signature, the system information carries the signature, and the signature check succeeds (where this case is denoted as a case 1), the terminal device sends the measurement result to the access network device; or when the signing capability information does not match the case of whether the system information carries the signature (where this case is denoted as a case 2), the terminal device does not send the measurement result to the access network device.

It should be understood that the foregoing case 1 and case 2 are two parallel solutions. To be specific, when the terminal device receives the physical layer parameter and the system information for the candidate cell, the case 1 or the case 2 may occur; or when the terminal device receives physical layer parameters and system information for a plurality of candidate cells, some candidate cells may correspond to the case 1, and the other candidate cells may correspond to the case 2. For example, the terminal device receives signing capability information, and a physical layer parameter and system information for a cell 1. The signing capability information indicates that the cell 1 supports signing the system information, and the system information for the cell 1 carries a signature. In this case, the terminal device checks the signature. If the signature check succeeds, the terminal device sends a measurement result of signal strength of the cell 1 to the access network device. For another example, the terminal device receives signing capability information, and a physical layer parameter and system information for a cell 2. The signing capability information indicates that the cell 2 supports signing the system information, but the system information for the cell 2 does not carry a signature. In this case, the terminal device does not send a measurement result of signal strength of the cell 2 to the access network device.

Based on the foregoing solution, when the signing capability information matches the case of whether the system information carries the signature, and the signature check succeeds, the terminal device may determine that the candidate cell is a trusted cell, and report the measurement result of the signal strength of the candidate cell to the access network device. Therefore, handover to a false base station can be avoided, and communication security can be improved.

With reference to the third aspect, in some implementations of the third aspect, that the terminal device determines whether the signing capability information matches a case of whether the system information carries a signature includes: When the signing capability information indicates that the candidate cell does not support signing the system information, and the system information does not carry the signature, the terminal device determines that the signing capability information matches the case of whether the system information carries the signature; when the signing capability information indicates that the candidate cell supports signing the system information, but the system information does not carry the signature, the terminal device determines that the signing capability information does not match the case of whether the system information carries the signature; or when the signing capability information indicates that the candidate cell does not support signing the system information, but the system information carries the signature, the terminal device determines that the signing capability information does not match the case of whether the system information carries the signature.

According to a fourth aspect, a cell handover method is provided. The method includes: A terminal device receives a physical layer parameter and system information for a candidate cell, where the system information includes a signature and an identifier of the candidate cell, and the signature is used to verify whether the system information is forged or tampered with. The terminal device measures signal strength of the candidate cell based on the physical layer parameter, to obtain a measurement result. The terminal device checks the signature. When the signature check succeeds, the terminal device sends the measurement result to an access network device.

Based on the foregoing solution, when the candidate cell carries the signature, and the signature check succeeds, the terminal device reports a measurement report for the candidate cell to the access network device, so that the terminal device can be prevented from being handed over to a false base station, and communication security can be improved.

With reference to the fourth aspect, in some implementations of the fourth aspect, the measurement result is carried in a measurement report, the measurement report further includes signature check result indication information, and the signature check result indication information indicates that the signature check succeeds.

Based on the foregoing solution, the terminal device may indicate, to the access network device by using the signature check result indication information, that the signature check of the candidate cell succeeds, so that the access network device can determine a cell handover policy of the terminal device based on the signature check result indication information, to prevent the terminal device from being handed over to the false base station.

With reference to the fourth aspect, in some implementations of the fourth aspect, the method further includes: When the signature check fails, the terminal device skips sending the measurement result to the access network device.

Based on the foregoing solution, when the signature check fails, the terminal device may determine that the candidate cell is untrusted, and the terminal device may not send the measurement result to the access network device, to prevent the terminal device from being handed over to the false base station, and improve communication security.

With reference to the fourth aspect, in some implementations of the fourth aspect, the method further includes: The terminal device receives signing capability information from the access network device, where the signing capability information indicates that the candidate cell supports signing the system information. That the terminal device checks the signature includes: The terminal device checks the signature based on the signing capability information.

Based on the foregoing solution, when the signing capability information of the candidate cell indicates that the candidate cell supports signing, and the system information for the candidate cell carries the signature, the terminal device may check the signature in the system information, to avoid checking a signature carried by the false base station, and save a resource.

With reference to the fourth aspect, in some implementations of the fourth aspect, the method further includes: The terminal device receives signature check indication information from the access network device. The signature check indication information indicates any one of the following: the terminal device to check the signature carried in the received system information; the terminal device to report a signature check result to the access network device; that the access network device supports determining a handover policy for the candidate cell based on a signature check result; or that the access network device has been upgraded.

With reference to the fourth aspect, in some implementations of the fourth aspect, that the terminal device checks the signature includes: The terminal device checks the signature based on the signature check indication information.

According to a fifth aspect, a cell handover method is provided. The method includes: An access network device sends measurement configuration information and signing capability information to a terminal device, where the measurement configuration information includes an identifier of a candidate cell of the terminal device, and the signing capability information indicates whether the candidate cell supports signing system information. The access network device receives a measurement report for the candidate cell from the terminal device. The access network device determines, based on the measurement report of the terminal device, whether to hand over the terminal device from a serving cell to the candidate cell.

Based on the foregoing solution, the access network device may configure the signing capability information of the candidate cell for the terminal device, so that the terminal device can determine, based on the signing capability information, whether the candidate cell is a cell of a false base station, to prevent the terminal device from being handed over to the false base station, and improve communication security.

With reference to the fifth aspect, in some implementations of the fifth aspect, the method further includes: The access network device receives the measurement report for the candidate cell and one or both of signature obtaining indication information and/or signature check result indication information from the terminal device, where the signature obtaining indication information indicates whether the system information for the candidate cell carries a signature, the signature check result indication information indicates whether signature check succeeds, and the signature is used to verify whether the system information for the candidate cell is forged or tampered with. That the access network device determines, based on the measurement report of the terminal device, whether to hand over the terminal device from a serving cell to the candidate cell includes: The access network device determines, based on the measurement report for the candidate cell and the signature obtaining indication information and/or the signature check result indication information, whether to hand over the terminal device from the serving cell to the candidate cell.

Based on the foregoing solution, the access network device may determine, based on one or more of a measurement report for a target cell, signing capability information of the target cell, signature obtaining indication information, and signature check result indication information, whether the terminal device can be handed over from the serving cell to the target cell, to prevent the terminal device from camping on the false base station, and improve communication security.

With reference to the fifth aspect, in some implementations of the fifth aspect, that the access network device determines, based on the measurement report for the candidate cell and the signature obtaining indication information and/or the signature check result indication information, whether to hand over the terminal device from the serving cell to the candidate cell includes: The access network device determines whether the signature obtaining indication information matches signing capability information of the candidate cell, where the signing capability information indicates whether the candidate cell supports signing the system information; and when the signature obtaining indication information matches the signing capability information, and the measurement report for the candidate cell meets a handover condition, the access network device determines to hand over the terminal device from the serving cell to the candidate cell.

Based on the foregoing solution, when the signing capability information of the target cell matches the signature obtaining indication information, and the measurement report for the target cell meets the handover condition, the access network device determines to hand over the terminal device from the serving cell to the target cell. In other words, when the signing capability information of the target cell does not match the signature obtaining indication information, or the measurement report for the target cell does not meet the handover condition, the access network device determines not to hand over the terminal device from the serving cell to the target cell, to prevent the terminal device from being handed over to the false base station.

With reference to the fifth aspect, in some implementations of the fifth aspect, that the access network device determines whether the signature obtaining indication information matches signing capability information of the candidate cell includes: When the signature obtaining indication information indicates that the system information carries the signature, and the signing capability information indicates that the candidate cell supports signing the system information, the access network device determines that the signature obtaining indication information matches the signing capability information of the candidate cell; or when the signature obtaining indication information indicates that the system information does not carry the signature, and the signing capability information indicates that the candidate cell does not support signing the system information, the access network device determines that the signature obtaining indication information matches the signing capability information of the candidate cell.

Based on the foregoing solution, the access network device may determine whether the signing capability information of the target cell matches the signature obtaining indication information, to prevent the terminal device from being handing over to the target cell whose signing capability information does not match the signature obtaining indication information, to prevent the terminal device from being handed over to the false base station.

With reference to the fifth aspect, in some implementations of the fifth aspect, that the access network device determines, based on the measurement report for the candidate cell and the signature obtaining indication information and/or the signature check result indication information, whether to hand over the terminal device from the serving cell to the candidate cell includes: When the signature check result indication information indicates that the signature check of the candidate cell succeeds, and the measurement report for the candidate cell meets a handover condition, the access network device determines to hand over the terminal device from the serving cell to the candidate cell.

Based on the foregoing solution, when the access network device determines, based on the signature check result indication information, that the signature check of the candidate cell succeeds, the access network device may determine that the access network device is trusted. Therefore, the access network device may hand over the terminal device to the candidate cell. In this way, the terminal device can be prevented from being handed over to the false base station.

With reference to the fifth aspect, in some implementations of the fifth aspect, the method further includes: The access network device obtains the signing capability information of the candidate cell by using local configuration information or from a network management system.

According to a sixth aspect, a cell handover apparatus is provided. The apparatus includes: a transceiver module, configured to receive a physical layer parameter and system information for a candidate cell, where the system information includes an identifier of the candidate cell; and a processing module, configured to measure signal strength of the candidate cell based on the physical layer parameter, to obtain a measurement result. The transceiver module is further configured to send a measurement report to an access network device, where the measurement report includes the measurement result and one or both of the following information: signature obtaining indication information and signature check result indication information, where the signature obtaining indication information indicates whether the system information carries a signature, the signature check result indication information indicates whether signature check succeeds, and the signature is used to verify whether the system information is forged or tampered with.

With reference to the sixth aspect, in some implementations of the sixth aspect, the processing module is further configured to: when the system information carries the signature, check, by a terminal device, the signature.

With reference to the sixth aspect, in some implementations of the sixth aspect, when the signature check succeeds, the measurement report includes the measurement result and the signature check result indication information, and the signature check result indication information indicates that the signature check succeeds.

With reference to the sixth aspect, in some implementations of the sixth aspect, when the signature check fails, the measurement report includes the measurement result and the signature check result indication information, and the signature check result indication information indicates that the signature check fails.

With reference to the sixth aspect, in some implementations of the sixth aspect, the measurement report further includes the signature obtaining indication information, and the signature obtaining indication information indicates that the system information carries the signature.

With reference to the sixth aspect, in some implementations of the sixth aspect, when the system information does not carry the signature, the measurement report includes the measurement result and the signature obtaining indication information, and the signature obtaining indication information indicates that the system information does not carry the signature.

With reference to the sixth aspect, in some implementations of the sixth aspect, the transceiver module is further configured to receive signature check indication information from the access network device. The signature check indication information indicates any one of the following: the processing module to check the signature carried in the received system information; the transceiver module to report a signature check result to the access network device; that the access network device supports determining a cell handover policy based on a signature check result; or that the access network device has been upgraded.

With reference to the sixth aspect, in some implementations of the sixth aspect, the processing module is further configured to check, based on the signature check indication information, whether the system information carries the signature.

According to a seventh aspect, a cell handover apparatus is provided. The apparatus includes: a transceiver module, configured to receive a measurement report for a candidate cell from a terminal device, where the measurement report includes a measurement result of signal strength of the candidate cell and one or both of the following information: signature obtaining indication information and signature check result indication information, where the signature obtaining indication information indicates whether system information for the candidate cell carries a signature, the signature check result indication information indicates whether signature check succeeds, and the signature is used to verify whether the system information for the candidate cell is forged or tampered with; and a processing module, configured to determine, based on the measurement report for the candidate cell, whether to hand over the terminal device from a serving cell to the candidate cell.

With reference to the seventh aspect, in some implementations of the seventh aspect, the processing module is specifically configured to determine whether the signature obtaining indication information matches signing capability information of the candidate cell, where the signing capability information indicates whether the candidate cell supports signing the system information; and when the signature obtaining indication information matches the signing capability information, and the measurement result of the candidate cell meets a handover condition, determine to hand over the terminal device from the serving cell to the candidate cell.

With reference to the seventh aspect, in some implementations of the seventh aspect, that the processing module is specifically configured to determine whether the signature obtaining indication information matches signing capability information of the candidate cell includes one or more of the following cases: When the signature obtaining indication information indicates that the system information carries the signature, and the signing capability information indicates that the candidate cell supports signing the system information, the processing module is configured to determine that the signature obtaining indication information matches the signing capability information of the candidate cell; when the signature obtaining indication information indicates that the system information does not carry the signature, and the signing capability information indicates that the candidate cell does not support signing the system information, the processing module is configured to determine that the signature obtaining indication information matches the signing capability information of the candidate cell; when the signature obtaining indication information indicates that the system information carries the signature, but the signing capability information indicates that the candidate cell does not support signing the system information, the processing module is configured to determine that the signature obtaining indication information does not match the signing capability information of the candidate cell; or when the signature obtaining indication information indicates that the system information does not carry the signature, but the signing capability information indicates that the candidate cell supports signing the system information, the processing module is configured to determine that the signature obtaining indication information does not match the signing capability information of the candidate cell.

With reference to the seventh aspect, in some implementations of the seventh aspect, the processing module is further configured to obtain the signing capability information of the candidate cell by using local configuration information; or the transceiver module is further configured to send a request message to a network management system, where the request message includes an identifier of the candidate cell, and the request message is used to request to obtain the signing capability information corresponding to the candidate cell; and the transceiver module is further configured to receive a response message from the network management system, where the response message includes the signing capability information.

With reference to the seventh aspect, in some implementations of the seventh aspect, when the signature check result indication information indicates that the signature check of the candidate cell succeeds, and the measurement result of the candidate cell meets the handover condition, the processing module is specifically configured to determine to hand over the terminal device from the serving cell to the candidate cell.

With reference to the seventh aspect, in some implementations of the seventh aspect, the transceiver module is further configured to send signature check indication information to the terminal device. The signature check indication information indicates any one of the following: the terminal device to check the signature carried in the received system information; the terminal device to report a signature check result to the apparatus; that the access network device supports determining a handover policy for the candidate cell based on a signature check result; or that the apparatus has been upgraded.

According to an eighth aspect, a cell handover apparatus is provided. The apparatus includes: a transceiver module, configured to receive signing capability information from an access network device, where the signing capability information indicates whether a candidate cell supports signing system information; and receive a physical layer parameter and the system information for the candidate cell, where the system information includes an identifier of the candidate cell; and a processing module, configured to: measure signal strength of the candidate cell based on the physical layer parameter, to obtain a measurement result; determine whether the signing capability information matches a case of whether the system information carries a signature; and when the signing capability information does not match the case of whether the system information carries the signature, skip sending the measurement result to the access network device.

With reference to the eighth aspect, in some implementations of the eighth aspect, the processing module is further configured to: when the system information carries the signature, check the signature carried in the system information.

With reference to the eighth aspect, in some implementations of the eighth aspect, the processing module is specifically configured to: when the signing capability information indicates that the candidate cell supports signing the system information, and the system information carries the signature, determine that the signing capability information matches the case of whether the system information carries the signature.

With reference to the eighth aspect, in some implementations of the eighth aspect, the transceiver module is further configured to: when the signing capability information matches the case of whether the system information carries the signature, and the signature check succeeds, send the measurement result to the access network device.

With reference to the eighth aspect, in some implementations of the eighth aspect, the processing module is specifically configured to: when the signing capability information indicates that the candidate cell does not support signing the system information, and the system information does not carry the signature, determine that the signing capability information matches the case of whether the system information carries the signature; when the signing capability information indicates that the candidate cell supports signing the system information, but the system information does not carry the signature, determine that the signing capability information does not match the case of whether the system information carries the signature; or when the signing capability information indicates that the candidate cell does not support signing the system information, but the system information carries the signature, determine that the signing capability information does not match the case of whether the system information carries the signature.

According to a ninth aspect, a cell handover apparatus is provided. The apparatus includes: a transceiver module, configured to receive a physical layer parameter and system information for a candidate cell, where the system information includes a signature and an identifier of the candidate cell, and the signature is used to verify whether the system information is forged or tampered with; and a processing module, configured to measure signal strength of the candidate cell based on the physical layer parameter, to obtain a measurement result; and check the signature. The transceiver module is further configured to: when the signature check succeeds, send the measurement result to an access network device.

With reference to the ninth aspect, in some implementations of the ninth aspect, the measurement result is carried in a measurement report, the measurement report further includes signature check result indication information, and the signature check result indication information indicates that the signature check succeeds.

With reference to the ninth aspect, in some implementations of the ninth aspect, the processing module is further configured to: when the signature check fails, skip sending the measurement result to the access network device.

With reference to the ninth aspect, in some implementations of the ninth aspect, the transceiver module is further configured to receive signing capability information from the access network device, where the signing capability information indicates that the candidate cell supports signing the system information; and the processing module is specifically configured to check the signature based on the signing capability information.

With reference to the ninth aspect, in some implementations of the ninth aspect, the transceiver module is further configured to receive signature check indication information from the access network device. The signature check indication information indicates any one of the following: to check the signature carried in the received system information; to report a signature check result to the access network device; that the access network device supports determining a handover policy for the candidate cell based on a signature check result; or that the access network device has been upgraded.

With reference to the ninth aspect, in some implementations of the ninth aspect, the processing module is specifically configured to check the signature based on the signature check indication information.

According to a tenth aspect, a cell handover apparatus is provided. The apparatus includes: a transceiver module, configured to: send measurement configuration information and signing capability information to a terminal device, where the measurement configuration information includes an identifier of a candidate cell of the terminal device, and the signing capability information indicates whether the candidate cell supports signing system information; and receive a measurement report for the candidate cell from the terminal device; and a processing module, configured to determine, based on the measurement report of the terminal device, whether to hand over the terminal device from a serving cell to the candidate cell.

With reference to the tenth aspect, in some implementations of the tenth aspect, the transceiver module is further configured to receive the measurement report for the candidate cell and one or both of signature obtaining indication information and/or signature check result indication information from the terminal device, where the signature obtaining indication information indicates whether the system information for the candidate cell carries a signature, the signature check result indication information indicates whether signature check succeeds, and the signature is used to verify whether the system information for the candidate cell is forged or tampered with; and the processing module is specifically configured to determine, based on the measurement report for the candidate cell and the signature obtaining indication information and/or the signature check result indication information, whether to hand over the terminal device from the serving cell to the candidate cell.

With reference to the tenth aspect, in some implementations of the tenth aspect, the processing module is specifically configured to: determine whether the signature obtaining indication information matches signing capability information of the candidate cell, where the signing capability information indicates whether the candidate cell supports signing the system information; and when the signature obtaining indication information matches the signing capability information, and the measurement report for the candidate cell meets a handover condition, determine to hand over the terminal device from the serving cell to the candidate cell.

With reference to the tenth aspect, in some implementations of the tenth aspect, the processing module is specifically configured to: when the signature obtaining indication information indicates that the system information carries the signature, and the signing capability information indicates that the candidate cell supports signing the system information, determine that the signature obtaining indication information matches the signing capability information of the candidate cell; or when the signature obtaining indication information indicates that the system information does not carry the signature, and the signing capability information indicates that the candidate cell does not support signing the system information, determine that the signature obtaining indication information matches the signing capability information of the candidate cell.

With reference to the tenth aspect, in some implementations of the tenth aspect, the processing module is specifically configured to: when the signature check result indication information indicates that the signature check of the candidate cell succeeds, and the measurement report for the candidate cell meets a handover condition, determine to hand over the terminal device from the serving cell to the candidate cell.

With reference to the tenth aspect, in some implementations of the tenth aspect, the processing module is further configured to obtain the signing capability information of the candidate cell by using local configuration information or from a network management system.

According to an eleventh aspect, a communication apparatus is provided. The apparatus is configured to perform the methods provided in the first aspect to the fifth aspect. Specifically, the apparatus may include a unit and/or a module configured to perform the methods provided in the first aspect to the fifth aspect, for example, a processing unit and/or a communication unit.

In an implementation, the apparatus is a network device. For example, the apparatus is an access network device. When the apparatus is the network device, the communication unit may be a transceiver or an input/output interface; and the processing unit may be a processor.

In another implementation, the apparatus is a chip, a chip system, or a circuit used in a network device. When the apparatus is the chip, the chip system, or the circuit used in a communication device, the communication unit may be an input/output interface, an interface circuit, an output circuit, an input circuit, a pin, a related circuit, or the like on the chip, the chip system, or the circuit; and the processing unit may be a processor, a processing circuit, a logic circuit, or the like.

In a possible case, the apparatus is a chip, a chip system, or a circuit in an access network device. In this case, the apparatus may include a unit and/or a module configured to perform the method provided in the second aspect or the fifth aspect, for example, a processing unit and/or a communication unit.

In another implementation, the apparatus is a terminal device. When the apparatus is the terminal device, the communication unit may be a transceiver or an input/output interface; and the processing unit may be a processor.

In a possible case, the apparatus is a terminal device, or a chip, a chip system, or a circuit in the terminal device. In this case, the apparatus may include a unit and/or a module configured to perform the method provided in any one of the first aspect, the third aspect, and the fourth aspect, for example, a processing unit and/or a communication unit.

Optionally, the transceiver may be a transceiver circuit. Optionally, the input/output interface may be an input/output circuit.

According to a twelfth aspect, a communication apparatus is provided. The apparatus includes: a memory, configured to store a program; and a processor, configured to execute the program stored in the memory. When the program stored in the memory is executed, the processor is configured to perform the methods provided in the first aspect to the fifth aspect.

According to a thirteenth aspect, this application provides a processor, configured to perform the methods provided in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the information is output by the processor, other processing may further need to be performed on the information before the information arrives at the transceiver. Similarly, when the processor receives the foregoing input information, the transceiver obtains/receives the foregoing information, and inputs the information into the processor. Further, after the transceiver receives the foregoing information, other processing may need to be performed on the information before the information is input into the processor.

Based on the foregoing principle, for example, receiving a request message mentioned in the foregoing methods may be understood as receiving input information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated onto a same chip, or may be separately disposed on different chips. A type of the memory and a manner in which the memory and the processor are disposed are not limited in this embodiment of this application.

According to a fourteenth aspect, a computer-readable storage medium is provided. The computer-readable storage medium stores program code to be executed by a device, and the program code is used to perform the methods provided in the first aspect to the fifth aspect.

According to a fifteenth aspect, a computer program product including instructions is provided. When the computer program product runs on a computer, the computer is enabled to perform the methods provided in the first aspect to the fifth aspect.

According to a sixteenth aspect, a chip is provided. The chip includes a processor and a communication interface. The processor reads, through the communication interface, instructions stored in a memory, to perform the methods provided in the first aspect to the fifth aspect.

Optionally, in an implementation, the chip may further include the memory. The memory stores the instructions, and the processor is configured to execute the instructions stored in the memory. When the instructions are executed, the processor is configured to perform the methods provided in the first aspect to the fifth aspect.

### BRIEF DESCRIPTION OF DRAWINGS

FIG. 1 is a diagram of a network architecture to which embodiments of this application are applicable;
FIG. 2 shows two diagrams of structures of a false base station;
FIG. 3 is an example flowchart of a method for preventing a UE from accessing a false base station in an initial access process;
FIG. 4 is an example flowchart of a method for performing cell handover on a UE;
FIG. 5 is an example flowchart of an attack method of a false base station in a UE handover process;
FIG. 6 is an example flowchart of a cell handover method according to an embodiment of this application;
FIG. 7 is an example flowchart of another cell handover method according to an embodiment of this application;
FIG. 8 is an example flowchart of still another cell handover method according to an embodiment of this application;
FIG. 9 is an example flowchart of still another cell handover method according to an embodiment of this application;
FIG. 10 is a block diagram of a cell handover apparatus according to an embodiment of this application; and
FIG. 11 is a block diagram of another cell handover apparatus according to an embodiment of this application.

### DESCRIPTION OF EMBODIMENTS

To make the objectives, technical solutions, and advantages of this application clearer, the following describes the technical solutions in this application with reference to the accompanying drawings. A specific operation method in a method embodiment may also be applied to an apparatus embodiment or a system embodiment. In the descriptions of this application, unless otherwise specified, "a plurality of" means two or more than two.

In various embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

In this specification, the claims, and the accompanying drawings of this application, the terms "first", "second", "third", "fourth", and various other ordinal number terms (if existent) are intended to distinguish between similar objects but do not necessarily indicate a specific order or sequence. It may be understood that various numerals in this application are merely used for differentiation for ease of description, but are not used to limit the scope of this application. Sequence numbers of the foregoing processes do not mean an execution order, and the execution order of the processes should be determined based on functions and internal logic of the processes. It should be understood that data termed in such a way are interchangeable in appropriate circumstances, so that embodiments described herein can be implemented in other orders than the order illustrated or described herein. In addition, the terms "include" and "have" and any variants thereof are intended to cover a non-exclusive inclusion. For example, a process, a method, a system, a product, or a device that includes a list of steps or units is not necessarily limited to those expressly listed steps or units, but may include other steps or units not expressly listed or inherent to such a process, method, product, or device.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

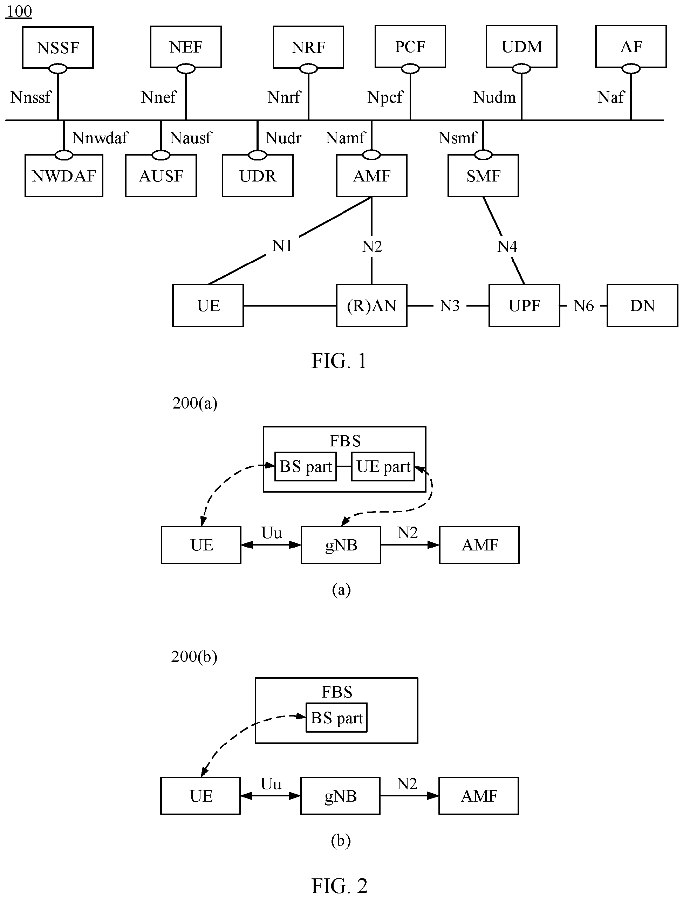

FIG. 1 is a diagram of a 5th generation (5th generation, 5G) network architecture that is based on a service-oriented architecture.

The 5G network architecture shown in FIG. 1 may include three parts: a terminal device, a data network (data network, DN), and an operator network. The following briefly describes functions of some network elements in the 5G network architecture.

The operator network may include one or more of the following network elements: an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR), a network repository function (network repository function, NRF) network element, an application function (application function, AF) network element, an access and mobility management function (access and mobility management function, AMF) network element, a session management function (session management function, SMF) network element, a radio access network (radio access network, RAN) network element, a user plane function (user plane function, UPF) network element, and the like. In the foregoing operator network, a part other than a radio access network part may be referred to as a core network part.
1. A user equipment (user equipment, UE) may be referred to as a terminal device (terminal device), a terminal apparatus, an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, or a user apparatus. The terminal device may be a device that provides voice/data connectivity for a user, for example, a handheld device having a wireless connection function or a vehicle-mounted device. Currently, some examples of the terminal may be a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, or a terminal device in a future evolved public land mobile network (public land mobile network, PLMN).

In addition, the terminal device may alternatively be a terminal device in an internet of things (Internet of things, IoT) system. An IoT is an important part of future information technology development. A main technical feature of the IoT is to connect things to a network by using a communication technology, to implement an intelligent network of man-machine interconnection and interconnection between things. An IoT technology can implement massive connections, deep coverage, and terminal power saving by using, for example, a narrow band (narrow band, NB) technology.

In addition, the terminal device may further include a smart printer, a train detector, and the like. Main functions include collecting data (which is a function of some terminal devices), receiving control information and downlink data of a network device, sending an electromagnetic wave, and transmitting uplink data to the network device.

It should be understood that the user equipment may be any device that can access a network. The terminal device may communicate with an access network device by using an air interface technology.

Optionally, the user equipment may be used as a base station. For example, the user equipment may be used as a scheduling entity that provides a sidelink signal between user equipments in V2X, D2D, or the like. For example, a cellular phone and a car communicate with each other by using a sidelink signal. The cellular phone communicates with a smart household device without relaying a communication signal through a base station.

2. The (radio) access network ((radio) access network, (R)AN) device is configured to provide a network access function for an authorized user equipment in a specific area, and is capable of using transmission tunnels of different quality of service based on a level of the user equipment, a service requirement, and the like.

The (R)AN can manage radio resources and provide an access service for the user equipment, to forward a control signal and user equipment data between the user equipment and a core network. The (R)AN may also be understood as a base station in a conventional network.

For example, the access network device in embodiments of this application may be any communication device having a wireless transceiver function for communicating with the user equipment. The access network device includes but is not limited to an evolved NodeB (evolved NodeB, eNB), a gNB or a transmission point (TRP or TP) in a 5G system such as an NR system, may be one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, or an AAU node. In addition, the CU may be classified into an access network device in an access network (radio access network, RAN), or the CU may be classified into an access network device in the core network (core network, CN). This is not limited in this application.

3. The user plane function (user plane function, UPF) network element is configured to perform packet routing and forwarding, quality of service (quality of service, QoS) handling for user plane data, and the like.

In a 5G communication system, a user plane network element may be a user plane function (user plane function, UPF) network element. In a future communication system, the user plane network element may still be the UPF network element, or may have another name. This is not limited in this application.

4. Access and mobility management function (access and mobility management function, AMF) network element: The access and mobility management function network element is mainly configured to perform mobility management, access management, and the like, and may be configured to implement a function other than session management in MME functions, for example, an access authorization/authentication function.

In the future communication system, an access and mobility management device may still be the AMF, or may have another name. This is not limited in this application.

5. The session management function (session management function, SMF) is mainly configured to: manage a session, allocate and manage an internet protocol (internet protocol, IP) address of a user equipment, select a termination point that can manage a user plane function and a policy control and charging function interface, notify downlink data, and so on.

In the future communication system, a session management network element may still be the SMF network element, or may have another name. This is not limited in this application.

6. The policy control function (policy control function, PCF) is configured to: guide a unified policy framework of network behavior, provide policy rule information for a control plane function network element (for example, the AMF or the SMF), and so on.

In the future communication system, a policy control network element may still be the PCF network element, or may have another name. This is not limited in this application.

7. The application function (application function, AF) is configured to: perform application-affected data routing, wirelessly access the network exposure function network element, and interact with a policy framework for policy control, and so on.

In the future communication system, an application network element may still be the AF network element, or may have another name. This is not limited in this application.

8. The unified data management (unified data management, UDM) is configured to perform UE identification handling, access authentication, registration, mobility management, and the like.

In the future communication system, a unified data management may still be the UDM network element, or may have another name. This is not limited in this application.

9. The authentication server (authentication server function, AUSF) is configured to provide an authentication service, generate a key, implement bidirectional authentication on a user equipment, and support a unified authentication framework.

In the future communication system, the authentication server function network element may still be the AUSF network element, or may have another name. This is not limited in this application.

10. A network data analytics function (network data analytics function, NWDAF) is configured to: identify a network slice instance, and load load-level information of the network slice instance. The network data analytics function enables NF consumers to subscribe to or unsubscribe from periodic notifications and notify the consumers when a threshold is exceeded.

In the future communication system, a network data analytics function network element may still be the NWDAF network element, or may have another name. This is not limited in this application.

11. Data network (data network, DN): The DN is a network located outside the operator network. The operator network may access a plurality of DNs, a plurality of services may be deployed in the DN, and a service, for example, a data service and/or a voice service may be provided for a terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and so on. For another example, the DN is an internal office network of a company, a mobile phone or a computer of an employee of the company may be a terminal device, and the mobile phone or the computer of the employee may access information, a data resource, and the like in the internal office network of the company.

In FIG. 1, Nausf, Nnef, Npcf, Nudm, Naf, Namf, Nsmf, N1, N2, N3, N4, and N6 are interface serial numbers. For meanings of the interface sequence numbers, refer to meanings defined in a 3GPP standard protocol. This is not limited herein.

In the network architecture shown in FIG. 1, the network elements may communicate with each other through interfaces shown in the figure. As shown in the figure, the UE and the AMF may interact with each other through an N1 interface, and an interaction message may be referred to as, for example, an N1 message (N1 Message). The RAN and the AMF may interact with each other through an N2 interface, and the N2 interface may be configured to send a non-access stratum (non-access stratum, NAS) message and the like. The RAN and the UPF may interact with each other through an N3 interface, and the N3 interface may be configured to transmit user plane data and the like. The SMF and the UPF may interact with each other through an N4 interface, and the N4 interface may be configured to transmit information such as tunnel identification information of an N3 connection, data buffering indication information, and a downlink data notification message. The UPF and the DN may interact with each other through an N6 interface, and the N6 interface may be configured to transmit user plane data and the like. A relationship between other interfaces and the network elements is shown in FIG. 1. For brevity, details are not described herein.

It should be understood that the foregoing network architecture to which embodiments of this application are applied is merely an example of a network architecture described from a perspective of the service-oriented architecture, and a network architecture to which embodiments of this application are applicable is not limited thereto. Embodiments of this application are applicable to any network architecture that can implement functions of the foregoing network elements.

It should be further understood that the AMF, the SMF, the UPF, a network slice selection function (network slice selection function, NSSF) network element, the NEF, the AUSF, the NRF, the PCF, and the UDM shown in FIG. 1 may be understood as network elements configured to implement different functions in the core network, for example, may be combined as required to form a network slice. These network elements of the core network may be independent devices, or may be integrated into a same device to implement different functions. Specific forms of the foregoing network elements are not limited in this application.

It should be further understood that the foregoing names are defined merely for distinguishing between different functions, and should not constitute any limitation on this application. This application does not exclude a possibility that another name is used in the 5G network and another future network. For example, in the 6G network, some or all of the foregoing network elements may still use terms in 5G, or may use other names. A name of an interface between the network elements in FIG. 1 is merely an example. In a specific implementation, the name of the interface may be another name. This is not specifically limited in this application. In addition, names of messages (or signaling) transmitted between the foregoing network elements are merely examples, and do not constitute any limitation on functions of the messages.

It should be understood that the foregoing network architecture to which embodiments of this application are applied is merely an example for description, and the network architecture to which embodiments of this application are applicable is not limited thereto. Embodiments of this application are applicable to any network architecture that can implement the functions of the foregoing network elements.

The network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Various aspects or features of embodiments of this application may be implemented by using a method or an apparatus, or implemented through a product using standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include, and/or carry instructions and/or data.

For ease of understanding of the technical solutions in embodiments of this application, some terms in this application are first briefly described.

### 1. False base station

The false base station (false base station, FBS) is an apparatus commonly used by an attacker to launch an attack on communication security. The attacker may deploy the false base station to attract a terminal device to camp on the false base station. The false base station may be disguised as a cell of a nearby real base station to approach a terminal and broadcast system information. The false base station may change a cell selection message in a SIB1 in the system information, to make it easier for the terminal to camp on the false base station.

FIG. 2 shows two possible forms of a false base station. (a) in FIG. 2 shows a possible form of the false base station. In this form, the false base station includes a base station part (BS part) and a UE part (UE part). The base station part is configured to attract a terminal to camp on a cell of the false base station, and the UE part is configured to access a real base station as a real UE, and communicate with an AMF by using an N2 protocol. In this manner, an attacker may sniff, tamper with, or forge communication content between a real terminal and a network through the false base station. This type of false base station is also referred to as a man-in-the-middle false base station (man-in-the-middle false base station, MitM-FBS). (b) in FIG. 2 shows the other possible form of the false base station. In this form, the false base station includes only a base station part, and the false base station attracts a terminal to camp on the false base station through the base station part. Once the terminal camps on the false base station, the false base station may launch a deny of service (deny of service, DoS) attack on the terminal.

### 2. System information

The system information (system information) is a cell-level message, and mainly includes a master information block (master information block, MIB), a plurality of system information blocks SIBs, and positioning system information blocks Pos SIBs. The master information block includes some of most important and most frequently transmitted parameters that need to be obtained from a cell, for example, a downlink bandwidth configuration and a system frame number. Different system information blocks include various types of different information. Using a system information block 1 as an example, the system information block 1 includes a public land mobile network identifier, a tracking area number, a cell identifier, and the like. The positioning system information block mainly carries a positioning related parameter, for example, a base station location. For brevity, in embodiments of this application, an example in which system information includes only a master information block and a system information block is used for description.

### 3. Random access (random access, RA)

The random access is an information exchange mechanism (or process) used to establish a connection between a device that does not access a network and the network in a communication system with access control, for example, an LTE system or a 5G system. Because a random access process is performed on a random access channel (random access channel, RACH), the RA and the RACH are often mixed in protocols and oral language.

The random access is classified into contention-based random access and non-contention-based random access. The contention-based random access usually includes four steps, and each step corresponds to one message. A message 1, a message 2, a message 3, and a message 4 are included, and respectively carry different signaling or information. The non-contention-based random access includes only the first two steps. In addition, to reduce access time of the four-step contention-based random access, two-step random access is further provided. The two-step random access includes a message A and a message B. The message A includes a preamble and a first piece of data information (similar to the message 1 and the message 3 in the four-step random access), and the message B includes contention resolution and uplink scheduling (similar to the message 2 and the message 4 in the four-step random access).

### 4. Digital signature

The digital signature is application of an asymmetric cryptography (asymmetric cryptography) technology. Asymmetric cryptography is a type of cryptographic algorithm. In such a cryptographic method, a pair of keys is required, where one is a private key (usually referred to as a private key), and the other is a public key (usually referred to as a public key). The two keys are mathematically related. Usually, one is used as an encryption key, and the other is used as a decryption key. Information encrypted by using the encryption key can be decrypted only by using the decryption key corresponding to the encryption key. Therefore, an owner of the private key can encrypt the information by using the private key, to ensure integrity and accuracy of the information. The information encrypted by using the private key is referred to as a digital signature, which is referred to as a signature for short.

The digital signature has the following several features:
(1) Anti-counterfeiting (anti-forgery): The private key is known only by a signer. Therefore, others cannot construct a correct key.
(2) Implementability of identity authentication: As mentioned above, the digital signature cannot be forged by others. Therefore, a receiver can authenticate an identity claimed by a sender.
(3) Anti-tampering (anti-damage of information integrity): For the digital signature, the signature and an original file form mixed and integrated data and cannot be tampered with, to ensure data integrity.
(4) Anti-replay: In the digital signature, if technologies such as adding a sequence number and a timestamp to a signature packet are used, a replay attack can be avoided.
(5) Anti-repudiation: As mentioned above, the digital signature can be used to authenticate the identity and cannot be forged. Therefore, provided that the signed packet is kept, which is equivalent to describing that a manually signed contract text is kept, that is, evidence is kept, a signer cannot repudiate.
(6) Confidentiality (confidentiality): With confidentiality guarantee, an interception attack is invalid. A manually signed document (like a text) is not confidential. Once the document is lost, information in the document is likely to be disclosed. The digital signature can be used to encrypt a message to be signed, and certainly, if the signed message does not require confidentiality, the message may not be encrypted.

Signature check means that an information receiver uses a public key to verify whether data or a file released by an owner of a private key is complete and whether an information source is accurate. For example, the owner of the private key encrypts to-be-sent data (or digest information of the to-be-sent data) by using the private key, and then sends the to-be-sent data and a ciphertext to the receiver, where the ciphertext is a signature of the data. The receiver decrypts the ciphertext by using the public key, and verifies whether data obtained through decryption is consistent with the data received by the receiver from the owner of the private key (or digest information generated based on the received data). If the data is consistent, the verification succeeds. In this case, it indicates that received data information is complete and accurate, and it may be determined that the data is sent by the owner of the private key.

### 5. Replay attack

The replay attack (replay attack), also referred to as a replayed attack, a playback attack, or a freshness attack (freshness attack), is a form of malicious or fraudulent network attack that repeats or delays valid data.

The replay attack is a type of attack in which one time of valid data transmission is repeated maliciously or fraudulently. The replay attack can be launched by an initiator or by an adversary who intercepts and retransmits the data. The attacker steals an authentication credential through network monitoring or in another manner, and then sends the authentication credential to an authentication server again. It is understood from this explanation that encryption can effectively avoid session hijacking, but cannot avoid the replay attack. The replay attack may occur in any network communication process.

Anti-replay check is a method for checking received information to avoid the replay attack. The following describes several anti-replay check methods based on several methods for defending against the replay attack.
(1) Sequence number: Two communication parties agree to assign an ascending number (that is, a sequence number) to each packet to be sent. In this manner, the anti-replay check means that a receiver determines whether the replay attack exists by checking whether consecutive sequence numbers exist in received consecutive packets.
(2) Timestamp: It is specified that a timestamp of current time is included when a message is sent. In this manner, the anti-replay check means that after receiving a packet, a receiver checks whether a timestamp in the packet is within a validity period to determine whether the replay attack exists.
(3) Random number: A sender generates a random number each time before sending a packet, includes the random number in the packet, and calculates a MAC value. In this manner, the anti-replay check means that a receiver determines whether the replay attack exists by checking whether a random number that has been used exists in a received packet.

In an initial access process of a terminal device, the terminal device may receive system information for a cell, measure a signal of the cell, select an appropriate cell based on a measurement result, a cell selection rule, and the like, and then access the selected cell through a random access process.

However, an attacker may disguise a false base station as a cell of a real base station near the terminal device, broadcast system information such as a MIB or a SIB, and change cell selection information in a SIB 1 message, to make it easier for the terminal device to camp on the false base station. In other words, in the initial access process, the terminal device may access a cell of the false base station. Consequently, communication of the terminal device faces a security risk.

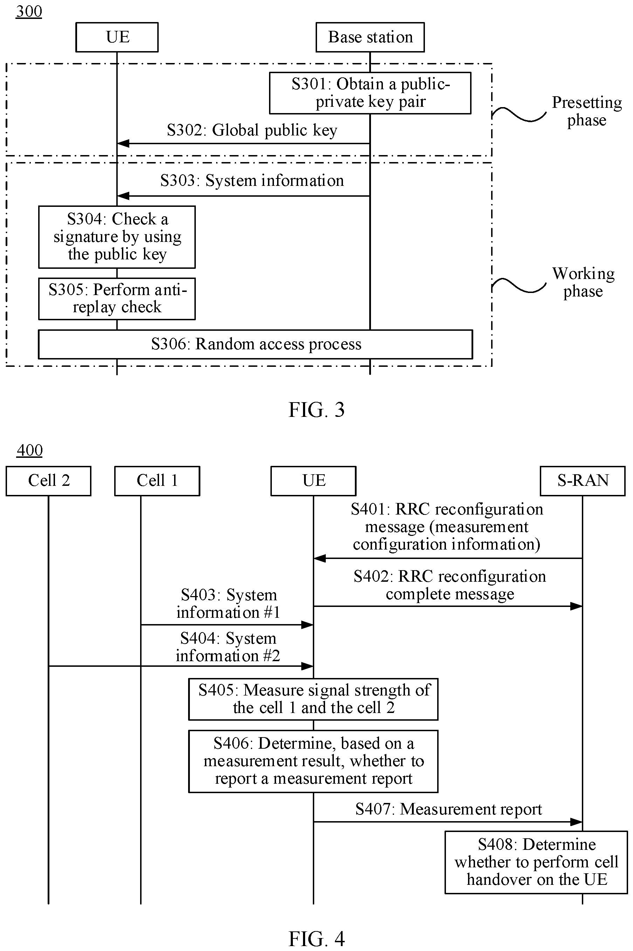

For the foregoing problem, FIG. 3 is an example flowchart of an initial access method 300. The method 300 can prevent a UE from accessing a false base station in an initial access process. The method 300 mainly includes two phases: a presetting phase and a working phase. The presetting phase includes the following steps.

S301: A base station obtains a public-private key pair.

For example, the base station obtains, by interacting with a trusted center (for example, a certificate management center or a private key generation center), the public-private key pair corresponding to the base station. The public-private key pair includes a private key used to sign system information and a global public key corresponding to the private key.

S302: The base station sends the global public key to the UE.

For example, after obtaining the public-private key pair, the base station sends the global public key to the UE, or presets a part or all of the global public key in the UE.

The working phase includes the following steps.

S303: The base station broadcasts the system information to the UE.

For example, first, the base station generates a signature of the system information by using the private key. For example, the base station uses the private key as a key, and uses the system information and/or an anti-replay parameter as an input parameter to generate the signature. The system information includes a certificate that carries public key information.

Then, the base station sends system information for a candidate cell in a broadcast manner. The system information includes a signature and/or an anti-replay parameter, and the anti-replay parameter may be, for example, a timestamp or a random number. This is not limited in this application.

S304: The UE checks the signature by using the public key.

For example, the UE receives the system information broadcast by the base station, obtains, by using the preset global public key and the certificate in the system information, the public key corresponding to the private key used by the base station for the signature, and then checks the signature by using the public key. For example, after decrypting the signature by using the public key, the UE obtains a hash value of the system information in the signature, and verifies whether the hash value of the system information in the signature is the same as a hash value of the system information received by the UE. If the hash values are the same, it indicates that the signature check succeeds.

S305: The UE performs anti-replay check.

For example, after the signature check succeeds, the UE may perform anti-replay check based on the anti-replay parameter. For example, if the anti-replay parameter is the timestamp, the UE checks whether the timestamp is within a validity period. If the timestamp is within the validity period, the anti-replay check succeeds; otherwise, the anti-replay check fails.

S306: The UE performs random access.

When both the signature check and the anti-replay check succeed, the UE measures signal strength of the candidate cell, selects an appropriate cell based on a measurement result (for example, cell signal strength) and a cell selection rule, and performs a random access process in the selected cell.

It should be noted that, due to a deployment problem, some of base stations near the UE may be upgraded and the other base stations may not be upgraded. A cell of an upgraded base station supports signing system information, and a cell of a base station that is not upgraded does not support signing system information. In this case, the UE may not receive a signature of the candidate cell. Therefore, in addition to factors such as signal strength, the UE may further need to consider a signature check result and an anti-replay check result to select a cell. For example, the UE may select a cell in a priority order in Table 1.

**Table 1**

| Priority order | Whether signature check succeeds | Whether anti-replay check succeeds | Scenario description |
|---|---|---|---|
| 1 | Yes | Yes | Upgraded base station |
| 2 | Yes | No | Out-of-synchronization between a UE and a base station or replay by a false base station |
| 3 | No signature | No anti-replay parameter | Base station that is not upgraded or false base station |
| 4 | No | No | False base station |

Table 1 shows four possible scenarios. In a first scenario, the UE receives system information broadcast by a base station for a candidate cell. The system information carries a signature and an anti-replay parameter. The UE checks the signature and the anti-replay parameter in the system information. If both the signature check and the anti-replay check succeed, it indicates that the base station is an upgraded base station and the base station is a trusted base station. In a second scenario, the UE receives system information broadcast by a base station for a candidate cell. The system information carries a signature and an anti-replay parameter. The UE checks the signature and the anti-replay parameter in the system information. If the signature check succeeds but the anti-replay check fails, it indicates that the base station is out of synchronization with the UE, or indicates that the base station is a false base station and the system information is information replayed by the false base station. In a third scenario, the UE receives system information broadcast by a base station for a candidate cell, but the system information does not carry a signature or an anti-replay parameter, indicating that the base station is a base station that is not upgraded, or indicating that the base station is a false base station. In a fourth scenario, the UE receives system information broadcast by a base station for a candidate cell. The system information carries a signature and an anti-replay parameter. The UE checks the received signature and anti-replay parameter. If neither the signature check nor the anti-replay check succeeds, it indicates that the base station is a false base station.

The foregoing four cases correspond to four priorities in descending order, and the UE may select a cell in the priority order. To be specific, when the UE receives system information broadcast by different base stations, in correspondence to the foregoing different scenarios, the UE may select an appropriate cell in the priority order in Table 1. However, it should be noted that, for the fourth scenario, the UE may determine that the base station sending the system information is a false base station, and therefore, the UE may not select a cell of the base station.

According to the foregoing solution, system information for a candidate cell can be prevented from being forged or tampered with, and a UE is prevented from accessing a cell of a false base station in an initial access process.

FIG. 4 is an example flowchart of a method 400 for performing cell handover on a UE. The method 400 mainly includes the following steps.

S401: An S-RAN sends an RRC reconfiguration message to a UE. Correspondingly, the UE receives the RRC reconfiguration message from the S-RAN.

For example, the source radio access network device (source RAN, S-RAN) (also referred to as a source base station) sends the RRC reconfiguration (RRC Reconfiguration) message to a UE in a connected mode, and the S-RAN is an access network device that currently provides a service for the UE. In a possible implementation, the RRC reconfiguration message includes measurement configuration (measConfig) information, and the measurement configuration information is used to configure, for the UE, information required for measuring a candidate cell. The measurement configuration information includes a measurement object (measurement object) and a reporting configuration (reporting configuration), and optionally, may further include information such as a measurement identifier (measurement identifier), a quantity configuration (quantity configuration), and a measurement gap (measurement gap).

The measurement object is used to identify a candidate cell that needs to be measured by the UE, that is, a to-be-measured cell. The to-be-measured cell may also be referred to as a target cell of the UE. The measurement object may include an identifier of one or more candidate cells. For example, if the measurement object in the measurement configuration information includes identifiers of a cell 1 and a cell 2, it indicates that the measurement object of the UE is the cell 1 and the cell 2, or the UE needs to measure signal strength of the cell 1 and the cell 2.

The reporting configuration is measurement report configuration information, and the measurement report configuration information includes a reporting criterion (reporting criterion). The reporting criterion is a condition for triggering the UE to report a measurement report for the candidate cell. To be specific, when a measurement result of a candidate cell meets the reporting criterion, the UE may report the measurement report for the candidate cell. The reporting criterion may be, for example, that signal strength of the candidate cell is greater than or equal to a threshold. Specifically, for example, the measurement object of the UE is the cell 1 and the cell 2. If the signal strength of the cell 1 is greater than the threshold, and the signal strength of the cell 2 is less than the threshold, the UE may report a measurement report for the cell 1, without reporting a measurement report for the cell 2. For another example, the reporting criterion may be an identifier list of candidate cells whose measurement reports need to be reported. When an identifier of a candidate cell is in the list, the UE reports a measurement report for the candidate cell.

Optionally, the measurement report configuration information may further include measurement parameter information, and the measurement parameter information indicates a measurement result of a parameter that needs to be included in the measurement report. For example, the measurement parameter information indicates that the measurement report includes a measurement result of signal strength of the candidate cell. In this case, the UE needs to measure the signal strength of the candidate cell.

Optionally, the measurement report configuration information may further include a reporting format (reporting format), and the reporting format is used to identify a specific format of the measurement report reported by the UE to the base station.

The measurement identifier is used to associate one measurement object with one piece of measurement report configuration information. A plurality of measurement identifiers are configured, so that a plurality of measurement objects can be associated with one measurement report configuration, or a plurality of measurement report configurations can be associated with one measurement object.

The quantity configuration may indicate a quantity of cells included by the UE in the measurement report. For example, the quantity configuration indicates that the UE includes measurement results of two cells in the measurement report. In this case, the UE may include measurement results of two candidate cells with highest signal strength in the measurement report.

The measurement gap may indicate a period of performing measurement by the UE. For example, if the measurement gap indicates that the period of performing measurement by the UE is 30s, the UE measures a signal of the candidate cell every 30s.

In the foregoing example, the S-RAN configures the measurement configuration information for the UE through an RRC reconfiguration procedure, that is, the measurement configuration information is carried in the RRC reconfiguration message. However, it should be understood that the measurement configuration information may alternatively be carried in another message. For example, the S-RAN may include the measurement configuration information in an RRC resume (RRC resume) message. This is not limited in this application.

S402: The UE sends an RRC reconfiguration complete message to the S-RAN. Correspondingly, the S-RAN receives the RRC reconfiguration complete message from the UE.

For example, the UE receives the RRC reconfiguration message from the S-RAN. After completing an RRC reconfiguration, the UE sends the RRC reconfiguration complete (RRC reconfiguration complete) message to the S-RAN.

It should be understood that if the S-RAN sends the measurement configuration information to the UE in another procedure, the UE should reply with a response message of another type. For example, the S-RAN sends the RRC resume (RRC resume) message to the UE in S401, and includes the measurement configuration information in the RRC resume message. After completing an RRC resume, the UE sends an RRC resume complete message to the S-RAN.

Further, the UE receives system information for one or more cells. For ease of description, this embodiment of this application is described by using an example in which the UE receives system information for the cell 1 and the cell 2, and the system information for the cell 1 and the system information for the cell 2 are respectively denoted as system information #1 and system information #2.

S403: The UE receives the system information #1 for the cell 1.

S404: The UE receives the system information #2 for the cell 2.

For example, the UE first detects, in a blind detection manner, whether signaling for one or more cells that is sent through a control channel is received. In a case, the UE receives a physical layer parameter #1 that is sent by a base station of the cell 1 through a control channel. The physical layer parameter #1 is used to receive information that is sent by the base station through a data channel, and decode encoded system information #1 for the cell 1 that is carried on the data channel. The physical layer parameter #1 may be, for example, a scheduling resource location used by a physical downlink shared channel, a carrier/bandwidth part indication, or precoding information.

The UE receives, based on the physical layer parameter #1, the encoded system information #1 for the cell 1 that is sent by the base station of the cell 1 through the data channel, and decodes the encoded system information #1 by using the physical layer parameter #1, to obtain the system information #1. The system information #1 includes the identifier of the cell 1. It should be understood that, system information that separately appears in this embodiment of this application is decoded system information. For example, that the UE decodes the encoded system information #1 by using the physical layer parameter #1, to obtain the system information #1 means that the UE decodes the encoded system information #1 by using the physical layer parameter #1, to obtain decoded system information #1. A similar part is not described repeatedly.

Similarly, the UE receives a physical layer parameter #2 for the cell 2 that is sent by a base station of the cell 2 by using a control message, then receives, based on the physical layer parameter #2, encoded system information #2 for the cell 2 that is sent by the base station through a data channel, and decodes the encoded system information #2 to obtain the system information #2. The system information #2 includes the identifier of the cell 2.

It should be understood that the base station of the cell 1 may be the same as or different from the base station of the cell 2, the base station of the cell 1 may be the same as or different from the S-RAN, and the base station of the cell 2 may be the same as or different from the S-RAN. This is not limited in this application.

It should be further understood that, in embodiments (including the accompanying drawings) of this application, that a cell sends system information to a UE means that a base station in which the cell is located sends the system information for the cell to the UE. A similar part is not described repeatedly.

S405: The UE measures the signal strength of the cell 1 and the cell 2.

For example, the UE respectively measures the signal strength of the cell 1 and the signal strength of the cell 2 based on the physical layer parameter #1 and the physical layer parameter #2.

It should be understood that an order of performing S404 and S405 is not limited in this application. For example, after receiving the physical layer parameter #1 for the cell 1, the UE may measure the signal strength of the cell 1 by using the physical layer parameter #1, and then receive the system information #1 for the cell 1 based on the physical layer parameter #1, or may measure the signal strength of the cell 1 after receiving the system information #1. This is not limited in this application.

S406: The UE determines, based on a measurement result, whether to report a measurement report.

For example, the system information #1 includes the identifier of the cell 1, and the UE determines, based on the identifier of the cell 1, whether the cell 1 is a measurement object, or determines, based on the identifier of the cell 1, whether the cell 1 is a target cell. For example, the UE checks whether the measurement object in the measurement configuration information includes the identifier of the cell 1. If the identifier of the cell 1 is included, it indicates that the cell 1 is the measurement object. If the cell 1 is the measurement object, or if the cell 1 is the target cell of the UE, the UE further determines whether a measurement result of the cell 1 meets the reporting criterion.

For example, the reporting criterion in the measurement configuration information is that the signal strength of the candidate cell is greater than or equal to the threshold. Therefore, when the signal strength of the cell 1 is greater than or equal to the threshold, the UE determines that the measurement result of the cell 1 meets the reporting criterion.

Similarly, the system information #2 includes the identifier of the cell 2, and the UE determines, based on the identifier of the cell 2, whether the cell 2 is a measurement object. If the cell 2 is the measurement object, the UE further determines whether a measurement result of the cell 2 meets the reporting criterion; or if the cell 2 is not the measurement object, the UE may not determine a measurement result of the cell 2.

S407: The UE reports the measurement report to the S-RAN. Correspondingly, the S-RAN receives the measurement report reported by the UE.

For example, if a measurement result of one or more candidate cells meets the reporting criterion, the UE reports a measurement report to the S-RAN. The measurement report includes the measurement result of the one or more candidate cells. For example, in the foregoing example, if the cell 1 is the measurement object of the UE, and the measurement result of the cell 1 meets the reporting criterion, the UE reports the measurement report to the S-RAN. The measurement report includes the measurement result of the cell 1.

S408: The S-RAN determines whether to perform cell handover on the UE.

For example, after receiving the measurement report from the UE, the S-RAN determines, based on the measurement report, whether to perform cell handover on the UE. For example, the S-RAN receives the measurement report for the cell 1 from the UE. The measurement report includes the measurement result of the signal strength of the cell 1. The S-RAN determines whether the measurement result of the cell 1 meets a handover condition. The handover condition is a condition used to determine whether the UE can be handed over from a serving cell to the candidate cell, and the handover condition is, for example, that the signal strength of the candidate cell is greater than a specified threshold. If the measurement result of the cell 1 meets the handover condition, the S-RAN may determine to perform cell handover on the UE, or hand over the UE to the cell 1, or hand over the UE from the serving cell to the cell 1.

A possible cell handover process is described above with reference to S401 to S408. However, in the foregoing cell handover process, the false base station may forge an identifier of a valid candidate cell, and broadcast system information to the UE. Therefore, the UE may receive the system information broadcast by the false base station, and report a measurement report of the false base station to the S-RAN. In this case, the UE may be handed over to the false base station. This brings a security risk to communication.

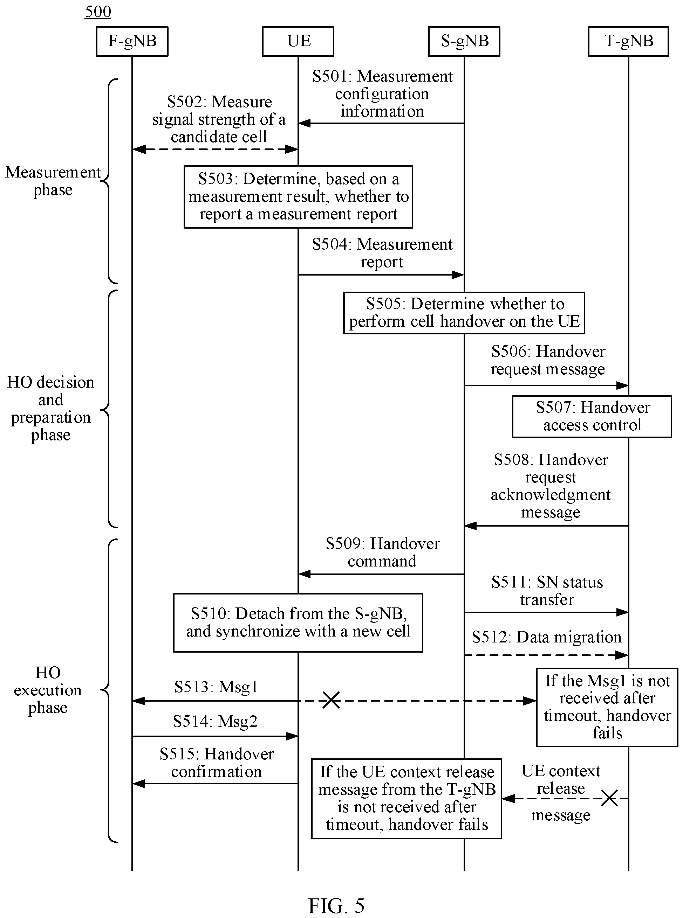

With reference to FIG. 5, the following describes a method 500 for launching an attack by a false base station in a UE handover process. The following describes the method 500 based on a 5G architecture. In other words, an example in which a gNB in 5G is used as a radio access network device is used for description. In this method embodiment, an S-gNB (source gNB) represents a source base station, a T-gNB (target gNB) represents a target base station, and an F-gNB (false gNB) represents a false base station. The method 500 mainly includes a measurement phase, a handover (handover, HO) decision and preparation phase, and an HO execution phase.

The measurement phase mainly includes the following steps.

S501: The S-gNB sends measurement configuration information to a UE.

For example, the S-gNB may deliver the measurement configuration information to the UE through an RRC reconfiguration procedure or an RRC resume procedure. The measurement configuration information includes a measurement object and a reporting configuration, and optionally, may further include information such as a measurement identifier and a quantity configuration. For a specific solution, refer to the descriptions of step S401 in the method 400. Details are not described herein again.

S502: The UE measures signal strength of a candidate cell.

For example, the UE receives a physical layer parameter for one or more candidate cells, receives system information for the candidate cell based on the physical layer parameter, and measures signal strength of the candidate cell based on the physical layer parameter.

S503: The UE determines, based on a measurement result, whether to report a measurement report.

For example, the UE determines, based on a cell identifier in the system information, whether the cell is a measurement object. If the cell is the measurement object, and the measurement result of the candidate cell meets a reporting criterion, the UE determines to report the measurement result of the candidate cell.

S504: The UE sends the measurement report to the S-gNB.

For example, the UE includes, in the measurement report, the measurement result of the candidate cell that meets the reporting criterion, and sends the measurement report to the S-gNB.

In a case, if the F-gNB is disguised as the T-gNB, a cell ID of the T-gNB is used to broadcast a message to the UE, a cell of the T-gNB is in a measurement object list in the measurement configuration information, and a measurement result of the cell of the F-gNB meets the reporting criterion, the UE may report the measurement result of the F-gNB. For example, if the UE determines that a cell identifier of the F-gNB (that is, the cell ID of the T-gNB) is included in a target cell identifier list, the UE determines whether the measurement result of the cell of the F-gNB meets the reporting criterion. If the measurement result meets the reporting criterion, the UE reports a measurement report to the S-RAN. The measurement report includes the cell ID of the T-gNB and the measurement result of the cell of the F-gNB.

The HO decision and preparation phase includes the following steps.

S505: The S-gNB determines whether to perform cell handover on the UE.

For example, after receiving the measurement report from the UE, the S-gNB determines, based on the measurement report, whether to perform cell handover on the UE. For example, if the measurement result of a candidate cell (which may be the cell of the F-gNB) indicates that the signal strength of the candidate cell reaches a specified threshold, the S-gNB may determine to perform cell handover on the UE, or hand over the UE to the candidate cell.

S506: The S-gNB sends a handover request message to the T-gNB.

For example, when a measurement result (which may be the measurement result of the cell of the F-gNB) corresponding to the cell identifier of the T-gNB meets a cell handover condition, the S-gNB may send the handover request (Handover Request) message to the T-gNB through an Xn interface. The handover request message includes an identifier of the UE and the identifier of the candidate cell, and the handover request message is used to request to hand over the UE to the candidate cell.

S507: The T-gNB performs handover admission control.

For example, the T-gNB receives the handover request message from the S-gNB, and performs handover admission control (HO admission control) based on the handover request message. For a specific process, refer to an existing protocol. This is not limited in this application.

S508: The T-gNB sends a handover request acknowledgment message to the S-gNB.

For example, after completing a handover admission control procedure, the T-gNB sends the handover request acknowledgment (Handover Request Acknowledgment) message to the S-gNB, and provides new RRC configuration information in the handover request acknowledgment message.

The HO execution phase mainly includes the following steps.

S509: The S-gNB sends a handover command to the UE.

For example, after the S-gNB receives the handover request message from the T-gNB, the S-gNB sends the handover command (HO command) to the UE. The handover command includes an RRC reconfiguration (RRC Reconfiguration) message, and the RRC reconfiguration message includes the cell ID of the T-gNB and all information required by the UE to access the cell. The RRC reconfiguration message further includes the RRC configuration information received from the handover request acknowledgment message included by the S-gNB in the RRC reconfiguration message.

S510: The UE detaches from the source base station, and synchronizes with a new cell.

For example, the UE receives the handover command from the S-gNB, then detaches (detaches) from the S-gNB, and synchronizes (synchronizes) with the new cell (that is, a cell corresponding to a cell ID carried in the handover command).

S511: The S-gNB sends an SN status transfer message to the T-gNB.

Optionally, in S512, the S-gNB migrates data to the T-gNB.

For example, after receiving the handover request acknowledgment message, the S-gNB sends the SN status transfer (SN status Transfer) message to the T-gNB, and migrates the data to the T-gNB.

Further, the UE initiates, based on the cell ID in the handover command, random access to a base station corresponding to the cell. The F-gNB is disguised as the T-gNB, and uses the cell ID of the T-gNB to broadcast a signal. In addition, the UE may not be within a coverage area of the T-gNB. Therefore, the UE may initiate random access to the F-gNB, and attach to the F-gNB. The following uses a non-contention-based random access process as an example for description.

S513: The UE sends a Msg1 to the F-gNB.

For example, the UE sends a random access preamble, also referred to as the Msg1, to the F-gNB.

S514: The F-gNB sends a Msg2 to the UE.

For example, after receiving the Msg1 from the UE, the F-gNB sends a random access response, also referred to as the Msg2, to the UE.

S515: The UE sends a handover confirmation to the F-gNB.

For example, after receiving the random access response from the F-gNB, the UE sends the handover confirmation (HO confirmation) to the F-gNB. The handover confirmation includes an RRC reconfiguration complete (RRC Reconfiguration complete) message.

However, because the UE performs random access to the F-gNB, the T-gNB does not receive the Msg1 from the UE. If the T-gNB still does not receive the Msg1 after timeout, the handover fails.

Because the T-gNB does not receive the Msg1 from the UE, that is, the UE does not perform random access to the T-gNB, the T-gNB does not send a UE context release message to the S-gNB. If the S-gNB does not receive the UE context release message from the T-gNB after the timeout, the handover fails.

Therefore, in the foregoing procedure, the false base station broadcasts system information to the UE by forging an identifier of a valid candidate cell, to attract the UE to camp on the false base station. This brings a security risk to communication.

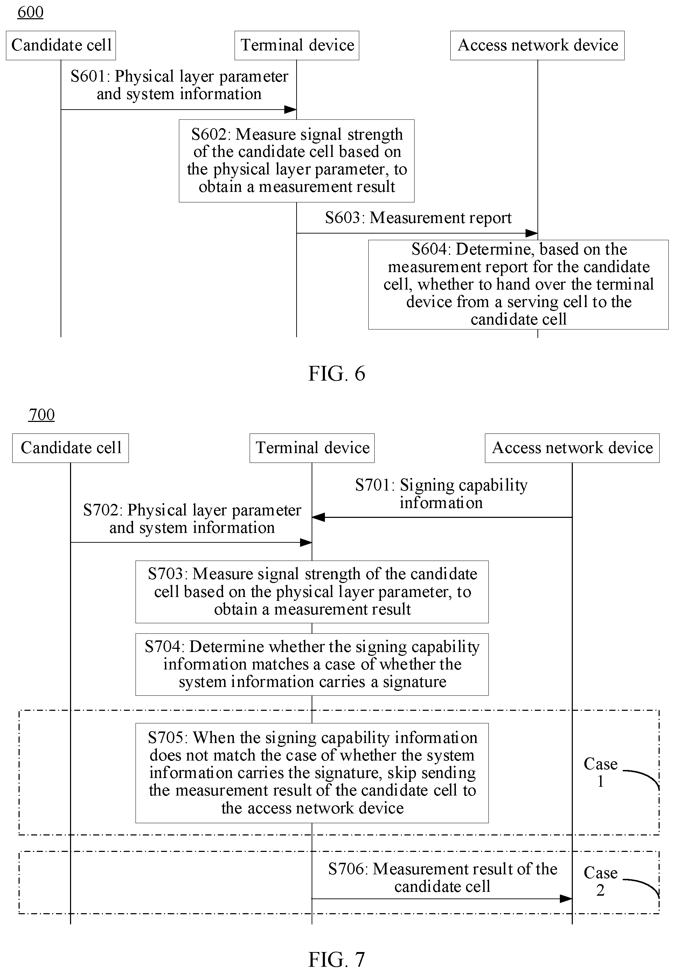

FIG. 6 is an example flowchart of a method 600 according to an embodiment of this application. The following describes the method 600 by using an example with reference to steps.

S601: A terminal device receives a physical layer parameter and system information for a candidate cell.

For example, the system information includes an identifier of the candidate cell, the physical layer parameter may be used to measure signal strength of the candidate cell, and the physical layer parameter may be, for example, a scheduling resource location used by a physical downlink shared channel, a carrier/bandwidth part indication, or precoding information.

It should be understood that the candidate cell in this embodiment of this application may be any cell within a measurement range of the terminal device, or the candidate cell may be any cell to which the terminal device can be handed over, or the candidate cell may be a neighboring cell of the terminal device. In different scenarios, the candidate cell herein may have another name. This is not limited in this application.

It should be further understood that the system information may carry a signature, and the signature is used to verify whether the system information is forged or tampered with. For example, when an access network device of the candidate cell supports signing the system information, or the access network device of the candidate cell has a signing capability, the access network device of the candidate cell may include the signature in the system information for the candidate cell. Optionally, the access network device of the candidate cell may further include an anti-replay parameter (for example, a timestamp or a random number) in the system information. The anti-replay parameter is used by the terminal device to verify whether the terminal device is under a replay attack. The access network device of the candidate cell may be the same as or different from a current access network device of the terminal device. This is not limited in this application.

Optionally, before S601, the terminal device may further receive measurement configuration information from the access network device. The access network device herein is a device that currently provides a network access service for the terminal device. The measurement configuration information includes information such as a measurement object and a reporting configuration of the terminal device. For specific descriptions, refer to S401 and S402 in the method 400. Details are not described herein again.

S602: The terminal device measures the signal strength of the candidate cell based on the physical layer parameter, to obtain a measurement result.

For a specific measurement process, refer to an existing protocol. This is not limited in this application.

Optionally, the terminal device may first determine whether the candidate cell is a measurement object (or a target cell) of the terminal device. If the candidate cell is the measurement object (or the target cell) of the terminal device, the terminal device measures the signal strength of the candidate cell.

For example, the terminal device obtains the identifier of the candidate cell from the system information for the candidate cell, and then determines whether the identifier of the candidate cell is in an identifier list of measurement objects. If the identifier of the candidate cell is in the identifier list of measurement objects, the terminal device determines that the candidate cell is the measurement object (or the target cell) of the terminal device; otherwise, the terminal device determines that the candidate cell is not the measurement object of the terminal device. It should be understood that the terminal device may obtain the measurement configuration information from the access network device in advance. The measurement configuration information includes the measurement object of the terminal device. For a specific implementation, refer to S401 and S402 in the method 400. Details are not described herein again. In this manner, measurement of signal strength of a candidate cell that is not a measurement object can be avoided, to reduce resource consumption of the terminal device.

Optionally, if the access network device has been upgraded, or if the access network device supports determining a cell handover policy based on a signature check result, before S601, the access network device may further send signature check indication information to the terminal device. The signature check indication information indicates any one of the following: the terminal device to check the signature carried in the received system information; the terminal device to report the signature check result to the access network device; that the access network device supports determining a cell handover policy based on a signature check result; or that the access network device has been upgraded.

The signature check indication information may be information at a cell granularity, information at an access network device granularity, information at a tracking area granularity, information at a public land mobile network granularity, or information at a location granularity. This is not limited in this application. For example, when the signature check indication information is the information at the cell granularity, the signature check indication information may indicate that when a serving cell of the terminal device is a cell, the terminal device needs to perform signature check on the system information for the candidate cell. For another example, when the signature check indication information is the information at the base station granularity, the signature check indication information may indicate that when a serving cell of the terminal device belongs to a base station, the terminal device needs to perform signature check on the system information for the candidate cell.

Correspondingly, the terminal device receives the signature check indication information from the access network device, and checks, based on the signature check indication information, the signature carried in the system information. In other words, in this implementation, if the terminal device does not receive the signature check indication information from the access network device, the terminal device may not check the signature carried in the system information, to reduce resource consumption of the terminal device. Alternatively, in another implementation, the terminal device reports the signature check result to the access network device based on the signature check indication information. In other words, in this implementation, if the terminal device does not receive the signature check indication information from the access network device, the terminal device may not report the signature check result to the access network device.

Optionally, when the system information carries the signature, the terminal device checks the signature.

In a possible implementation, the terminal device may first measure the signal strength of the candidate cell, and then check the signature carried in the system information. For example, the terminal device measures the signal strength of the candidate cell based on the physical layer parameter. When the measurement result meets a reporting criterion, and the system information carries the signature, the terminal device checks the signature. In this implementation, check of a signature in system information for a candidate cell whose measurement result does not meet the reporting criterion can be avoided, to reduce resource overheads of the terminal device.

In another possible implementation, the terminal device may first check the signature carried in the system information, and then measure the signal strength of the candidate cell. For example, when the system information carries the signature, the terminal device may first check the signature, and if the signature check succeeds, the terminal device measures the signal strength of the candidate cell based on the physical layer parameter. In this implementation, measurement of a candidate cell whose signature check fails can be avoided, to reduce resource overheads of the terminal device.

S603: The terminal device sends a measurement report to the access network device, where the measurement report includes the measurement result of the candidate cell.

In a possible implementation (denoted as a manner a), the terminal device reports, to the access network device, a measurement result of a candidate cell whose measurement result meets the reporting criterion.

For example, when the measurement result of the candidate cell meets the reporting criterion, the terminal device sends the measurement report to the access network device. The measurement report includes the measurement result of the candidate cell and one or both of the following information: signature obtaining indication information and signature check result indication information. The signature obtaining indication information indicates whether the system information carries the signature, and the signature check result indication information indicates whether the signature carried in the system information succeeds in the check. The following separately provides descriptions by using examples with reference to different cases.

In a first possible case, when the system information carries the signature, and the signature check succeeds, the measurement report includes the measurement result and the signature check result indication information, and the signature check result indication information indicates that the signature check succeeds. Optionally, the system information may further include the signature obtaining indication information, and the signature obtaining indication information indicates that the system information carries the signature. In this case, the signature obtaining indication information and the signature check result indication information may be two independent information elements, or may be one information element. This is not limited in this application.

In a second possible case, when the system information carries the signature, but the signature check fails, the measurement report includes the measurement result and the signature check result indication information. In this case, the signature check result indication information indicates that the signature check fails. Optionally, the system information may further include the signature obtaining indication information, and the signature obtaining indication information indicates that the system information carries the signature.

In a third possible case, when the system information does not carry the signature, the measurement report includes the measurement result and the signature obtaining indication information, and the signature obtaining indication information indicates that the system information does not carry the signature.

In a possible implementation, the signature obtaining indication information or the signature check result indication information in this embodiment of this application may indicate different cases by using different values. With reference to Table 2, the following describes several possible values by using the signature check result indication information as an example.

**Table 2**

| Number | Value #1 | Value #2 |
|---|---|---|
| 1 | 1 | 0 |
| 2 | 1 | Null |
| 3 | YES (character string) | Null |
| 4 | YES (character string 1) | NO (character string 2) |
| 5 | Null | 1 |
| 6 | Null | 0 |
| 7 | 0 | Null |

Table 2 shows seven possible values. The value #1 indicates that the signature check succeeds, and the value #2 indicates that the signature check fails. In a first example, when a value of the signature check result indication information is "1", it indicates that the signature check succeeds; or when a value of the signature check result indication information is "0", it indicates that the signature check fails. In a second example, when a value of the signature check result indication information is "1", it indicates that the signature check succeeds; or when the signature check result indication information is null (Null), or when the terminal device does not send the signature obtaining indication information, it indicates that the signature check fails. In a third example, when the signature check result indication information is the character string "YES", it indicates that the signature check succeeds; or when the signature check result indication information is null (Null), it indicates that the signature check fails. In a fourth example, when the signature check result indication information is the character string 1 "YES", it indicates that the signature check succeeds; or when the signature check result indication information is the character string 2 "NO", it indicates that the signature check fails. In a fifth example, when the signature check result indication information is null (Null), it indicates that the signature check succeeds; or when a value of the signature check result indication information is "1", it indicates that the signature check fails. In a sixth example, when the signature check result indication information is null (Null), it indicates that the signature check succeeds; or when a value of the signature check result indication information is "0", it indicates that the signature check fails. In a seventh example, when a value of the signature check result indication information is "0", it indicates that the signature check succeeds; or when the signature check result indication information is null (Null), it indicates that the signature check fails. It should be understood that the value #1 and the value #2 may be any values (including characters, character strings, null, and the like), but the value #1 and the value #2 should be different. Table 2 shows only some possible values, and other values that are not shown should also fall within the protection scope of this application.

In another possible implementation (denoted as a manner b), the terminal device reports, to the access network device, a measurement result of a candidate cell whose system information carries a signature, whose signature check succeeds, and whose measurement result meets the reporting criterion.

For example, when the system information for the candidate cell carries the signature, the terminal device checks the signature. If the signature check succeeds, the terminal device measures the signal strength of the candidate cell to obtain the measurement result. If the measurement result meets the reporting criterion, the terminal device sends the measurement result of the candidate cell to the access network device. Alternatively, the terminal device may first measure the signal strength of the candidate cell to obtain the measurement result. When the measurement result meets the reporting criterion, the terminal device checks the signature in the system information. If the signature check succeeds, the terminal device sends the measurement result of the candidate cell to the access network device.

It should be understood that the measurement report may further include a measurement result of another candidate cell, that is, the measurement report includes a measurement result of one or more candidate cells. This is not limited in this application.

S604: The access network device determines, based on the measurement result of the candidate cell, whether to hand over the terminal device from the serving cell to the candidate cell.

For example, in correspondence to the foregoing manner a, the access network device receives the measurement report from the terminal device. The measurement report includes the measurement result of the candidate cell and one or both of the following information: the signature obtaining indication information and the signature check result indication information.

In correspondence to the foregoing first possible implementation, the measurement report includes the measurement result and the signature check result indication information, and the signature check result indication information indicates that the signature check succeeds. In this implementation, if the measurement result of the candidate cell meets a handover condition, the access network device determines that the terminal device may be handed over from the serving cell to the candidate cell.

In correspondence to the foregoing second possible implementation, the measurement report includes the measurement result and the signature check result indication information. In this case, the signature check result indication information indicates that the signature check fails. In this implementation, the access network device determines not to hand over the terminal device from the serving cell to the candidate cell.

In correspondence to the foregoing third possible implementation, the measurement report includes the measurement result and the signature obtaining indication information. The signature obtaining indication information indicates that the system information does not carry the signature. In this implementation, the access network device determines whether the signature obtaining indication information matches signing capability information of the candidate cell. The signing capability information of the candidate cell indicates whether the candidate cell supports signing the system information. Optionally, the access network device may obtain the signing capability information of the candidate cell by using local configuration information, or query for the signing capability information of the candidate cell by using a network management system. For example, the access network device sends a request message to the network management system. The request message includes the identifier of the candidate cell, and the request message is used to request to obtain the signing capability information corresponding to the candidate cell. The network management system sends a response message to the access network device based on the request message. The response message includes the signing capability information of the candidate cell. The access network device obtains, from the response message, the signing capability information corresponding to the candidate cell. When the signing capability information indicates that the candidate cell supports signing the system information, the access network device determines that the signature obtaining indication information does not match the signing capability information of the candidate cell; or when the signing capability information indicates that the candidate cell does not support signing the system information, the access network device determines that the signature obtaining indication information matches the signing capability information of the candidate cell. When the signature obtaining indication information matches the signing capability information of the candidate cell, the access network device determines that the terminal device can be handed over from the serving cell to the candidate cell. However, it should be noted that, if system information for another candidate cell carries a signature, and signature check succeeds, the access network device preferentially hands over the serving cell of the terminal device to the candidate cell.

Based on the foregoing solution (manner a), when reporting the measurement result of the candidate cell to the access network device, the terminal device may indicate, to the access network device, whether the system information for the candidate cell carries the signature of the system information and/or whether the signature check of the system information for the candidate cell succeeds, so that the access network device can determine, based on information reported by the terminal device, a cell to which the terminal device is to be handed over, to reduce a probability of handing over the terminal device to the false base station, and improve security performance of the terminal device.

For example, in correspondence to the foregoing manner b, the access network device receives the measurement result of the candidate cell from the terminal device. In this case, the access network device determines, based on the measurement result of the candidate cell, whether to hand over the terminal device from the serving cell to the candidate cell. A specific implementation is similar to S408 in the method 400. For brevity, details are not described herein again.

Based on the foregoing solution (manner b), the terminal device reports the measurement result of the candidate cell only when the system information for the candidate cell carries the signature and the signature check succeeds. Therefore, reporting of a measurement result of the false base station can be avoided, the terminal device is prevented from being handed over to the false base station, and security performance of the terminal device is improved.

FIG. 7 is an example flowchart of a method 700 according to an embodiment of this application. The following describes the method 700 by using an example with reference to steps.

S701: An access network device sends signing capability information to a terminal device.

For example, the signing capability information indicates whether a candidate cell supports signing system information. The signing capability information may be information at a cell granularity, information at a base station granularity, information at a tracking area granularity, information at a public land mobile network granularity, or information at a location granularity. This is not limited in this application. For example, when the signing capability information is the information at the cell granularity, the signing capability information may indicate whether one candidate cell (or more candidate cells) supports (or support) signing the system information. The terminal device may obtain an identifier of the candidate cell from the system information for the candidate cell. If the identifier of the candidate cell is included in the signing capability information, the terminal device may determine, based on the signing capability information, whether the candidate cell supports signing the system information. For another example, when the signing capability information is the information at the base station granularity, the signing capability information may indicate whether a candidate cell of a base station supports signing system information. The terminal device may obtain, from the system information for the candidate cell, an identifier of a base station to which the candidate cell belongs. If the identifier of the base station of the candidate cell is included in the signing capability information, the terminal device may determine, based on the signing capability information, whether the candidate cell supports signing the system information.

Optionally, before S701, the access network device may obtain the signing capability information of the candidate cell by using local configuration information, or query for the signing capability information of the candidate cell by using a network management system. For a specific process, refer to the example of S604 in the method 600. Details are not described herein again.

S702: The terminal device receives a physical layer parameter and the system information from the candidate cell.

S703: The terminal device measures signal strength of the candidate cell based on the physical layer parameter, to obtain a measurement result.

It should be understood that S702 and S703 are similar to S601 and S602 in the method 600. For brevity, details are not described herein again.

S704: The terminal device determines whether the signing capability information matches a case of whether the system information carries a signature.

The following separately provides descriptions with reference to two cases.

Case 1: S705: When the signing capability information does not match the case of whether the system information carries the signature, the terminal device does not send a measurement result of the candidate cell to the access network device.

For example, when the signing capability information indicates that the candidate cell supports signing the system information, but the system information does not carry the signature, the terminal device determines that the signing capability information does not match the case of whether the system information carries the signature. In this case, the terminal device does not send the measurement result of the candidate cell to the access network device.

For another example, when the signing capability information indicates that the candidate cell does not support signing the system information, but the system information carries the signature, the terminal device determines that the signing capability information does not match the case of whether the system information carries the signature. In this case, the terminal device does not send the measurement result of the candidate cell to the access network device.

Case 2: S706: When the signing capability information matches the case of whether the system information carries the signature, the system information carries the signature, and signature check succeeds, the terminal device sends the measurement result of the candidate cell to the access network device.

For example, when the signing capability information indicates that the candidate cell supports signing the system information, and the system information carries the signature, the terminal device determines that the signing capability information matches the case of whether the system information carries the signature. In this case, the terminal device checks the signature, and if the signature check succeeds, the terminal device sends the measurement result of the candidate cell to the access network device. Optionally, the terminal device may further send signature obtaining indication information to the access network device. The signature obtaining indication information indicates that the system information for the candidate cell carries the signature. Optionally, the terminal device may further send signature check result indication information to the access network device, and the signature check result indication information indicates that the signature check succeeds.

For another example, when the signing capability information indicates that the candidate cell does not support signing the system information, and the system information does not carry the signature, the terminal device determines that the signing capability information matches the case of whether the system information carries the signature. In this case, the terminal device may send the measurement result of the candidate cell to the access network device. Optionally, the terminal device may further send signature obtaining indication information to the access network device, and the signature obtaining indication information indicates that the system information for the candidate cell does not carry the signature.

It should be understood that the foregoing case 1 and case 2 are two parallel solutions. To be specific, when the terminal device receives the physical layer parameter and the system information for the candidate cell, the case 1 or the case 2 may occur; or when the terminal device receives physical layer parameters and system information for a plurality of candidate cells, some candidate cells may correspond to the case 1, and the other candidate cells may correspond to the case 2. For example, the terminal device receives signing capability information, and a physical layer parameter and system information for a cell 1. The signing capability information indicates that the cell 1 supports signing the system information, and the system information for the cell 1 carries a signature. In this case, the terminal device checks the signature. If the signature check succeeds, the terminal device sends a measurement result of signal strength of the cell 1 to the access network device. For another example, the terminal device receives signing capability information, and a physical layer parameter and system information for a cell 2. The signing capability information indicates that the cell 2 supports signing the system information, but the system information for the cell 2 does not carry a signature. In this case, the terminal device does not send a measurement result of signal strength of the cell 2 to the access network device.

It should be further understood that the terminal device may first measure signal strength of the candidate cell to obtain a measurement result, and then determine whether the signing capability information matches the case of whether the system information carries the signature. In other words, the terminal device may first perform S703, and then perform S704. In this implementation, the terminal device may perform S704 when the measurement result meets a reporting criterion. In other words, when the measurement result does not meet the reporting criterion, the terminal device may not perform S704, to reduce resource consumption of the terminal device.

Alternatively, the terminal device may first determine whether the signing capability information matches the case of whether the system information carries the signature, and then measure the signal strength of the candidate cell. In other words, the terminal device may first perform S704, and then perform S703. In this implementation, the terminal device may perform S703 when the signing capability information matches the case of whether the system information carries the signature. In other words, when the signing capability information does not match the case of whether the system information carries the signature, the terminal device may not perform S703, to reduce resource overheads of the terminal device.

Correspondingly, the access network device receives the measurement result of the candidate cell from the terminal device. In a possible implementation, the access network device determines, based on the measurement result of the candidate cell, whether to hand over the terminal device from a serving cell to the candidate cell. In this case, a specific implementation of the access network device is similar to S408 in the method 400. For brevity, details are not described herein again.

If the access network device receives the measurement result of the candidate cell from the terminal device and at least one of the following information: signature obtaining indication information and signature check result indication information, the access network device determines, based on the measurement result of the candidate cell and the signature obtaining indication information and/or the signature check result indication information, whether to hand over the terminal device from the serving cell to the candidate cell. In this case, a specific implementation of the access network device is similar to S604 in the method 600. For brevity, details are not described herein again.

Based on the foregoing solution, the terminal device may determine, based on a case of whether a signature is carried in a broadcast message for the candidate cell, and the signing capability information of the candidate cell and/or a signature check result of the candidate cell, whether the measurement report for the candidate cell can be reported, to reduce a probability that the terminal device camps on a false base station, and improve security performance of the terminal.

The following describes methods 800 and 900 provided in embodiments of this application based on a 5th generation (5th generation, 5G) network architecture. Embodiments provided in this application may be applied to the network structure shown in FIG. 1.

It should be understood that in some implementations, an S-RAN in the following method 800 and method 900 may correspond to the access network device in the method 600 and the method 700, a UE may correspond to the terminal device in the method 600 and the method 700, and a cell 1/cell 2 may correspond to the candidate cell in the method 600 and the method 700.

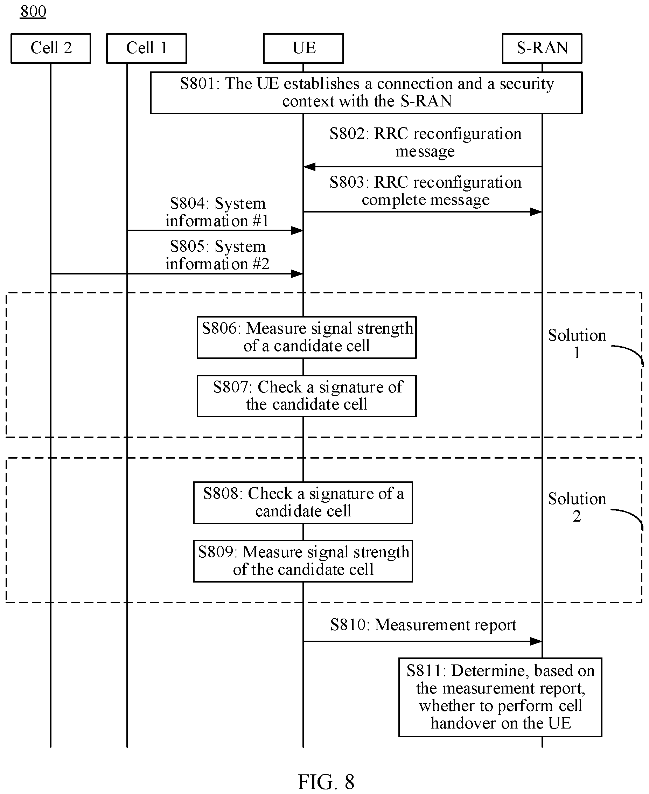

FIG. 8 is an example flowchart of the method 800 according to an embodiment of this application. With reference to the method 800, the following first describes a possible implementation (denoted as a solution A) provided in this embodiment of this application. The method 800 includes the following steps.

S801: A UE establishes a connection and a security context with an S-RAN.

For example, the UE establishes the connection to the S-RAN, or the UE accesses the S-RAN, and then establishes the security context with the S-RAN. For a specific process, refer to an existing protocol. This is not limited in this application.

It should be understood that, after the security context is established between the UE and the S-RAN, encryption or integrity protection may be performed on information transmitted between the UE and the S-RAN. For example, an RRC message may be protected by using the security context. The RRC message includes an RRC reconfiguration message, an RRC reconfiguration complete message, a measurement report reported by the UE, and the like.

S802: The S-RAN sends an RRC reconfiguration message to the UE.

S803: The UE sends the RRC reconfiguration complete message to the S-RAN.

For example, the S-RAN configures measurement configuration information for the UE through an RRC reconfiguration process, that is, the S-RAN may include the measurement configuration information in the RRC reconfiguration message. For a specific process, refer to the descriptions of S401 and S402 in the method 400. Details are not described herein again.

Optionally, the S-RAN may further send signature check indication information to the UE. The signature check indication information indicates whether the UE needs to check a signature carried in received system information; the signature check indication information indicates whether the UE needs to report a signature check result of a candidate cell to the S-RAN; the signature check indication information indicates whether the UE needs to include a signature check result of a candidate cell in the measurement report; the signature check indication information indicates whether the S-RAN supports determining a cell handover policy based on a signature check result of system information; or the signature check indication information indicates whether the S-RAN has been upgraded.

The signature check indication information may be information at a cell (Cell) granularity, information at a base station granularity, information at a tracking area granularity, information at a PLMN granularity, or information at a location granularity. This is not limited in this application. For example, when the signature check indication information is the information at the cell granularity, the signature check indication information may indicate that when a serving cell of the UE is a cell, the UE needs to perform signature check on the system information for the candidate cell. For another example, when the signature check indication information is the information at the base station granularity, the signature check indication information may indicate that when a serving cell of the UE belongs to a base station, the UE needs to perform signature check on the system information for the candidate cell.

The candidate cell in this embodiment of this application may be any cell, any cell within a measurement range of the UE, or a target cell of the UE. The candidate cell may be a cell of the S-RAN, or may be a cell of another RAN, or may include both a cell of an S-RAN and a cell of another RAN.

The signature check indication information may be carried in the RRC reconfiguration message. In this case, the signature check indication information may be an independent information element, or may be a part of the measurement configuration information. Alternatively, the signature check indication information may not be an explicit information element. For example, another information element may implicitly indicate content indicated by the signature check indication information. For example, when the measurement configuration information sent by the S-RAN to the UE carries the signature, it indicates that the S-RAN supports determining the handover policy based on the signature check result and/or an anti-replay check result of the system information. This is not limited in this application.

Further, the UE receives system information for one or more candidate cells. For ease of description, this embodiment of this application is described by using an example in which the UE receives system information for a cell 1 and a cell 2, and the system information for the cell 1 and the system information for the cell 2 are respectively denoted as system information #1 and system information #2.

S804: The UE receives the system information #1 for the cell 1.

S805: The UE receives the system information #2 for the cell 2.

For descriptions of a specific process, refer to S403 and S404 in the method 400. Details are not described herein again.

It should be understood that, if a base station of the candidate cell supports signing the system information, or if a base station of the candidate cell has a signing capability, the base station of the candidate cell may include the signature of the system information and/or an anti-replay parameter in the system information. For ease of description, in subsequent embodiments of this application, an example in which the system information carries the signature and the UE performs signature check on the system information carrying the signature is used for description. However, it should be understood that in some implementations, the system information in this embodiment of this application may include only the signature, or may include the signature and the anti-replay parameter. In this embodiment of this application, in the signature check, only the signature may be checked, or both the signature and the anti-replay parameter may be checked. This is not limited in this application.

Further, the UE measures signal strength of the candidate cell, and checks the signature carried in the system information. For ease of description, the following provides descriptions by using an example in which the UE performs measurement or signature check on the cell 1. The UE performs processing on the cell 2 in a similar manner. Details are not described again.

In an implementation (denoted as a solution 1), the UE first measures the candidate cell, and then checks the signature.

S806: The UE measures the signal strength of the candidate cell.

For example, the UE receives a physical layer parameter #1 for the cell 1, and then receives encoded system information #1 for the cell 1 based on the physical layer parameter #1. The UE decodes the encoded system information #1 by using the physical layer parameter #1, to obtain the system information #1, and then determines, based on an identifier of the cell 1 that is carried in the system information #1, whether the cell 1 is a target cell of the UE. When the cell 1 is the target cell of the UE, the UE measures signal strength of the cell 1 based on the physical layer parameter #1. In this implementation, a resource waste caused by measurement performed by the UE on a non-target cell can be avoided.

It should be understood that the UE may also measure signal strength of all neighboring cells. This is not limited in this application.

S807: The UE checks the signature of the candidate cell.

For example, the UE determines whether the system information for the candidate cell carries the signature. If the system information for the candidate cell carries the signature, the UE checks the signature of the candidate cell.

For example, if the cell 1 is the target cell of the UE, and the system information #1 for the cell 1 carries a signature, the UE checks the signature. A specific implementation of performing signature check by the UE is not limited in this application. The following provides a possible example: The UE decrypts the signature by using a preset public key, to obtain a first hash value. The UE performs hash calculation by using the received system information #1 (and/or the anti-replay parameter) as an input parameter, to obtain a second hash value. If the first hash value is the same as the second hash value, it indicates that the signature check succeeds; otherwise, it indicates that the signature check fails.

For another example, if the cell 1 is the target cell of the UE, but the system information #1 does not carry a signature #1, or if the cell 1 is not the target cell of the UE, the UE may not perform signature check on the cell 1.

Optionally, if the UE receives the signature check indication information from the S-RAN, before S807, the UE may determine, based on the signature check indication information, whether to check the signature of the candidate cell. Specifically, for example, when the signature check indication information indicates that the S-RAN supports determining the handover policy based on the signature check result of the candidate cell, the UE may perform S807. When the signature check indication information indicates that the S-RAN does not support determining the handover policy based on the signature check result of the candidate cell, the UE may not perform S807.

In another implementation (denoted as a manner 2), the UE first checks the signature of the candidate cell, and then measures the candidate cell.

S808: The UE checks the signature of the candidate cell.

For example, the UE performs signature check on the candidate cell that carries the signature.

For example, when the cell 1 is the target cell of the UE, and the system information #1 for the cell 1 carries a signature, the UE checks the signature.

S809: The UE measures the signal strength of the candidate cell.

In an implementation, the UE measures signal strength of all measurable candidate cells. In this case, the implementation of S809 is similar to that of S806. Details are not described herein again.

In another implementation, the UE measures signal strength of a candidate cell that carries a signature and whose signature check succeeds. For example, if the cell 1 is the target cell of the UE, and the system information #1 carries a signature, when signature check succeeds, the UE measures signal strength of the cell 1 based on a physical layer parameter #1. If the signature check of the cell 1 fails, the UE may not measure the signal strength of the cell 1. Therefore, in this implementation, the UE does not measure signal strength of a candidate cell whose signature check fails and a candidate cell that does not carry a signature, to save a resource.

S810: The UE reports the measurement report to the S-RAN.

For example, the UE determines, based on the measurement result of the candidate cell and the signature check result, whether to report the measurement report for the candidate cell to the S-RAN.

For example, the cell 1 is a measurement object of the UE. In this case, if a measurement result of the cell 1 meets a reporting criterion, and the signature check of the cell 1 succeeds, the UE may report a measurement report for the cell 1 to the S-RAN. The measurement report includes the measurement result of the cell 1.

For another example, the cell 1 is a measurement object of the UE. In this case, if a measurement result of the cell 1 meets a reporting criterion, but the signature check of the cell 1 fails, the UE does not report a measurement report for the cell 1 to the S-RAN.

For another example, the cell 1 is a measurement object of the UE. In this case, if a measurement result of the cell 1 meets a reporting criterion, but the system information #1 for the cell 1 does not carry a signature, the UE does not report a measurement report for the cell 1 to the S-RAN.

S811: The S-RAN determines, based on the measurement report, whether to perform cell handover on the UE.

For example, after receiving the measurement report from the UE, the S-RAN determines, based on the measurement report, whether to perform cell handover on the UE, or determines, based on the measurement report, whether to hand over the UE to the candidate cell. A specific process is similar to S408 in the method 400. Details are not described herein again.

In the foregoing solution A, the UE reports, to the S-RAN, the measurement report for the candidate cell that carries the signature, whose signature check succeeds, and whose measurement result meets the reporting criterion. However, in this case, if the base station in which the candidate cell is located is not upgraded, or if the candidate cell does not support signing the system information, the UE cannot be handed over to the cell. As a result, the UE may be handed over to a small quantity of cells, or even may not be handed over to any cell. In view of this, this embodiment of this application provides another implementation (denoted as a solution B). In this implementation, the UE reports, to the S-RAN, a measurement report for a candidate cell that meets the reporting criterion. The following describes the solution B by using an example with reference to an example flowchart of the method 800.

It should be understood that the solution of S801 to S809 in the solution B is similar to a solution of a corresponding part in the solution A. Details are not described herein again.

S810: The UE reports the measurement report to the S-RAN.

For example, after measuring the signal strength of the candidate cell, the UE reports, to the S-RAN, the measurement report for the candidate cell whose measurement result meets the reporting criterion.

Optionally, the UE may further send signature obtaining indication information and/or signature check result indication information to the S-RAN. The signature obtaining indication information indicates whether the system information for the candidate cell carries the signature, and the signature check result indication information indicates whether the signature check of the candidate cell succeeds.

The following uses the cell 1 as an example for description. In addition, for ease of description, the following solution is described on the premise that the measurement result of the cell 1 meets the reporting criterion.

For example, when the system information #1 for the cell 1 carries the signature and the signature check succeeds, the UE reports the measurement report for the cell 1. Optionally, the UE may further report signature obtaining indication information and/or signature check result indication information. The signature obtaining indication information indicates that the system information #1 for the cell 1 carries the signature, and the signature check result indication information indicates that the signature check of the cell 1 succeeds. It should be understood that the signature check result indication information may further indicate another type of information. For example, the signature check result indication information indicates that the cell 1 is not a cell of a false base station, or the signature check result indication information indicates that the cell 1 is a trusted cell. This is not limited in this application. Optionally, in this case, the UE may not report the signature obtaining indication information and/or the signature check result indication information. In this case, it indicates by default that the system information #1 for the cell 1 carries the signature and the signature check succeeds.

For another example, when the system information #1 for the cell 1 does not carry the signature, the UE reports both the measurement report for the cell 1 and signature obtaining indication information and/or signature check result indication information. The signature obtaining indication information indicates that the system information #1 for the cell 1 does not carry the signature, and the signature check result indication information indicates that the signature check of the system information #1 for the cell 1 fails.

For another example, when the system information #1 for the cell 1 carries the signature, but the signature check fails, the UE reports both the measurement report for the cell 1 and signature check result indication information. The signature check result indication information indicates that the signature check of the system information #1 for the cell 1 fails; the signature check result indication information indicates that the cell 1 is a cell of a false base station; or the signature check result indication information indicates that the cell 1 is untrusted. Optionally, the UE may further report signature obtaining indication information. The signature obtaining indication information indicates that the system information #1 for the cell 1 carries the signature.

It should be understood that, when the system information #1 for the cell 1 carries the signature but the signature check fails, the UE may not report the measurement report for the cell 1. To be specific, in this implementation, the UE may report only a measurement report for a candidate cell whose system information carries a signature and whose signature check succeeds and a measurement report for a candidate cell whose system information does not carry a signature, without reporting a measurement report for a candidate cell whose system information carries a signature but whose signature check fails, to save a resource.

It should be understood that, in the foregoing implementation, the signature obtaining indication information and the signature check result indication information may be two independent information elements, or may be an independent information element. That is, one piece of indication information (denoted as result indication information) may indicate both whether the system information for the candidate cell carries the signature and the signature check result of the candidate cell. The following uses an example for description. In this example, the UE may use different values for the result indication information to indicate different cases.

The following describes possible values of the indication information with reference to Table 3.

**Table 3**

| Priority | Whether a signature is carried | Signature check result | Anti-replay check result | Result indication information value |
|---|---|---|---|---|
| 1 | Yes | Success | Success | a |
| 2 | No | - | - | b |
| 3 | Yes | Failure | | c |

Table 3 shows three possible values. When a value of the result indication information is a, it indicates that the system information sent by the candidate cell carries the signature and the anti-replay parameter, and the signature check result and the anti-replay check result are both a success. When a value of the result indication information is b, it indicates that the system information sent by the candidate cell does not carry the signature or the anti-replay parameter. When a value of the result indication information is c, it indicates that the system information sent by the candidate cell carries the signature and the anti-replay parameter, but at least one of the signature check and the anti-replay check fails.

a, b, and c may be any values or null (Null), but a, b, and c should be different from each other.

Optionally, the three values, namely, a, b, and c may sequentially correspond to three priorities in descending order. When the UE reports measurement reports for a plurality of candidate cells to the S-RAN, and values of result indication information in the measurement reports for the plurality of candidate cells are different, the S-RAN may select, in a priority order, a cell to be handed over to.

The following describes other possible values of the result indication information with reference to Table 3.

**Table 4**

| Priority | Whether a signature and an anti-replay parameter are carried | Signature check result | Anti-replay check result | Result indication information value |
|---|---|---|---|---|
| 1 | Yes | Success | Success | d |
| 2 | No | - | - | e |
| 3 | Yes | Success | Failure | f |
| 4 | Yes | Failure | - | g |

Table 4 shows four possible values. When a value of the result indication information is d, it indicates that the system information for the candidate cell carries the signature and the anti-replay parameter, and the signature check result and the anti-replay check result are both a success. When a value of the result indication information is e, it indicates that the system information for the candidate cell does not carry the signature or the anti-replay parameter. When a value of the result indication information is f, it indicates that the system information for the candidate cell carries the signature and the anti-replay parameter, and the signature check succeeds, but the anti-replay check fails. When a value of the result indication information is g, it indicates that the system information for the candidate cell carries the signature and the anti-replay parameter, but the signature check fails.

d, e, f, and g may be any values or null (Null), but d, e, f, and g should be different from each other.

Optionally, the four values, namely, d, e, f, and g may correspond to four priorities in descending order. When the UE reports measurement reports for a plurality of candidate cells to the S-RAN, and values of result indication information in the measurement reports for the plurality of candidate cells are different, the S-RAN may select, in a priority order, a cell to be handed over to.

S811: The S-RAN determines, based on the measurement result, whether to perform cell handover on the UE.

For example, the S-RAN receives the measurement report from the UE, and then preferentially hands over the UE to a candidate cell that carries a signature and whose signature check succeeds. If there is no candidate cell that carries a signature and whose signature check succeeds, the S-RAN may hand over the UE to a candidate cell that does not carry a signature.

In an implementation, before determining to hand over the UE to the candidate cell that does not carry the signature, the S-RAN needs to verify whether the candidate cell supports signing system information. If the candidate cell does not support signing the system information, the S-RAN can determine to hand over the UE to the candidate cell (on the premise that other conditions are met).

The following describes, by using an example, an implementation in which the S-RAN verifies whether the candidate cell supports signing the system information.

The S-RAN obtains the signing capability information of the candidate cell based on the identifier of the candidate cell and based on a local configuration or by querying a network management system. The signing capability information indicates whether the candidate cell supports signing the system information. The S-RAN determines, based on the signing capability information of the candidate cell, whether the candidate cell supports signing the system information.

In an example, the S-RAN receives the measurement report for the cell 1 and a measurement report for the cell 2 from the UE. The measurement report for the cell 1 carries signature check result indication information, and the signature check result indication information indicates that the signature check of the cell 1 succeeds. The measurement report for the cell 2 carries signature obtaining indication information, and the signature obtaining indication information indicates that the system information for the cell 2 does not carry a signature. When measurement results of the cell 1 and the cell 2 both meet a handover condition, the S-RAN determines to hand over the UE to the cell 1.

In another example, the S-RAN receives the measurement report for the cell 1 and a measurement report for the cell 2 from the UE. The measurement report for the cell 1 carries signature check result indication information, and the signature check result indication information indicates that the signature check of the cell 1 fails. The measurement report for the cell 2 carries signature obtaining indication information, and the signature obtaining indication information #2 indicates that the system information for the cell 2 does not carry a signature. When measurement results of the cell 1 and the cell 2 both meet a handover condition, the S-RAN verifies whether the cell 2 supports signing the system information. When the cell 2 does not support signing the system information, the S-RAN determines to hand over the UE to the cell 2.

In the solution A of the foregoing method 800, the UE reports, to the S-RAN, the measurement report for the candidate cell that carries the signature, whose signature check succeeds, and whose measurement result meets the reporting criterion, to prevent the UE from accessing a false base station in a cell handover process, and improve communication security of the UE. However, in this case, if the candidate cell does not have the signing capability, the UE cannot be handed over to the candidate cell even if the cell is not attacked by the false base station.

In the solution B of the foregoing method 800, the UE reports, to the S-RAN, the measurement report for the candidate cell that meets a reporting criterion, and the S-RAN may determine, based on the measurement report reported by the UE and the signature obtaining indication information and/or the signature check result indication information, whether to hand over the UE to the candidate cell, to prevent the UE from accessing a false base station in a cell handover process. However, in this case, some candidate cells reported by the UE may be disguised by the false base station, and a resource waste is caused when the UE measures these candidate cells.

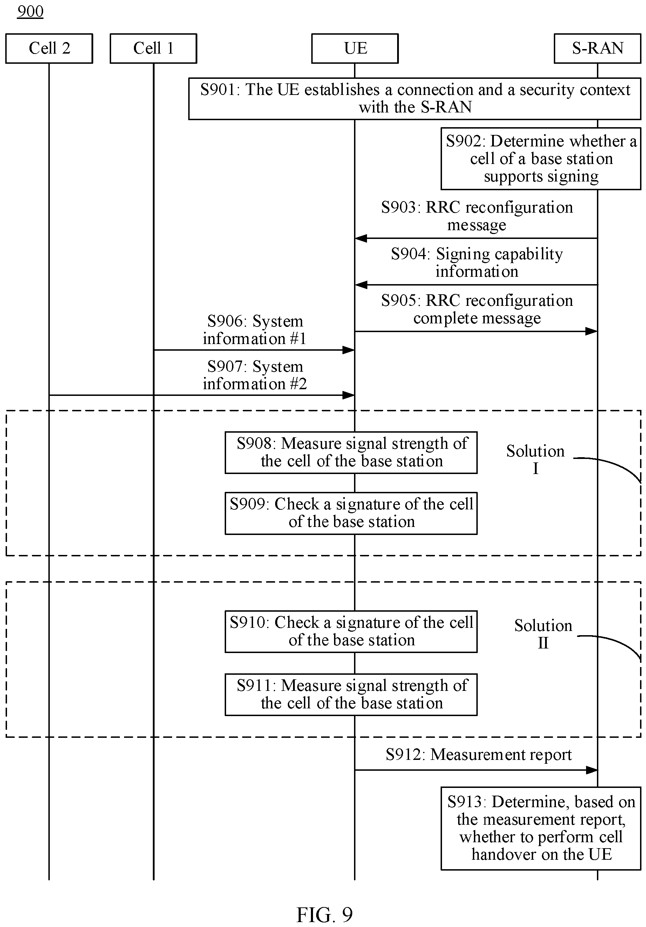

In view of this, FIG. 9 is an example flowchart of another cell handover method 900 according to an embodiment of this application. In the method 900, an S-RAN indicates capability information of a candidate cell to a UE in advance, and the UE may determine, based on the capability information of the candidate cell, whether to measure signal strength of the candidate cell or whether to report a measurement result of the candidate cell. The method 900 includes the following steps.

S901: The UE establishes a connection and a security context with the S-RAN.

It should be understood that S901 is similar to S801 in the method 800. For brevity, details are not described herein again.

S902: The S-RAN determines whether the candidate cell supports signing.

For example, the S-RAN determines, based on a local configuration or by querying a network management system (for example, an OAM), whether the candidate cell supports signing system information. In a possible implementation, the candidate cell may be a target cell of the UE. In this implementation, the S-RAN may first determine the target cell of the UE, and then determine, based on the local configuration or the network management system, whether the target cell of the UE supports signing the system information.

For example, candidate cells, namely, a cell 1 and a cell 2 are used as an example for description. The S-RAN sends a request message to the OAM. The request message includes an identifier of the cell 1 and an identifier of the cell 2, and the request message is used to request to verify whether the cell 1 and the cell 2 have a signing capability, or the capability verification request message is used to request to verify whether the cell 1 and the cell 2 support signing system information, or the request message is used to request to obtain signing capability information of the cell 1 and the cell 2. Correspondingly, the OAM receives the request message from the S-RAN, then locally queries, based on the identifiers of the cell 1 and the cell 2, whether the cell 1 and the cell 2 have the signing capability, and then returns a response message to the S-RAN. The response message includes the signing capability information, and the signing capability information indicates whether the cell 1 and the cell 2 have the signing capability. The S-RAN determines, based on the signing capability information from the OAM, whether the cell 1 and the cell 2 have the signing capability.

S903: The S-RAN sends an RRC reconfiguration message to the UE.

For example, the S-RAN may configure measurement configuration information for the UE in an RRC reconfiguration process. That is, the S-RAN may include the measurement configuration information in the RRC reconfiguration message. For a specific process, refer to the descriptions of S401 and S402 in the method 400. Details are not described herein again.

S904: The S-RAN sends signing capability information to the UE.

For example, the signing capability information indicates whether the candidate cell supports signing the system information, or the signing capability information indicates whether the candidate cell has the signing capability. If there are a plurality of candidate cells, the signing capability information separately indicates whether each of the plurality of candidate cells supports signing system information.

The signing capability information may be carried in the RRC reconfiguration message in S903. In this case, the signing capability information may be an independent information element, or may be a part of the measurement configuration information. This is not limited in this application.

The signing capability information may alternatively be carried in another message. For example, the signing capability information may alternatively be carried in a message newly generated by the S-RAN. In this way, content carried in a message already specified in an existing protocol does not need to be changed. In other words, the signing capability information and the measurement configuration information may alternatively be carried in different messages. This is not limited in this application.

The signing capability information may be information at a cell (Cell) granularity, information at a base station granularity, information at a tracking area granularity, information at a PLMN granularity, or information at a location granularity. This is not limited in this application. For example, when the signing capability information is the information at the cell granularity, the signing capability information may indicate whether one candidate cell (or more candidate cells) supports (or support) signing the system information. For another example, when the signing capability information is the information at the base station granularity, the signing capability information may indicate whether a candidate cell of a base station supports signing system information.

A specific format of the signing capability information may be in a plurality of different forms. This is not limited in this application. The following provides only several possible implementation forms. In a possible implementation, a format of the signing capability information is object+true/false. For example, when the signing capability information is the information at the cell granularity, the signing capability information may be, for example, Cell 1+true. In this case, the signing capability information may indicate that the cell 1 supports signing the system information. For another example, when the signing capability information is the information at the base station granularity, the signing capability information may be, for example, base station 1+true. In this case, the signing capability information may indicate that a cell of the base station 1 supports signing system information.

S905: The UE sends an RRC reconfiguration complete message to the S-RAN.

It should be understood that S905 is similar to S402 in the method 400. For brevity, details are not described again.

Further, the UE receives system information for one or more candidate cells. For ease of description, this embodiment of this application is described by using an example in which the UE receives the system information for the cell 1 and the cell 2, and the system information for the cell 1 and the system information for the cell 2 are respectively denoted as system information #1 and system information #2.

S906: The UE receives the system information #1 for the cell 1.

S907: The UE receives the system information #2 for the cell 2.

For descriptions of a specific process, refer to S403 and S404 in the method 400. Details are not described herein again.

Further, the UE measures the signal strength of the candidate cell, and checks a signature in the system information. For ease of description, the following provides descriptions by using an example in which the UE performs measurement or signature check on the cell 1. The UE performs processing on the cell 2 in a similar manner. Details are not described again.

In a solution (denoted as a solution I), the UE first measures the candidate cell, and then checks the signature.

S908: The UE measures the signal strength of the candidate cell.

S909: The UE checks the signature of the candidate cell.

S912: The UE reports a measurement report to the S-RAN.

The following describes the foregoing steps with reference to different cases.

In a possible implementation, the UE determines whether the signing capability information matches a case of whether the system information #1 carries a signature. That the signing capability information matches a case of whether the system information #1 carries a signature means that the signing capability information indicates that the cell 1 supports signing and the system information #1 carries the signature; or the signing capability information indicates that the cell 1 does not support signing and the system information #1 does not carry the signature. Specifically, examples are as follows:

In an implementation, the UE determines, based on the signing capability information, that the cell 1 supports signing. For example, the signing capability information indicates that the cell of the base station 1 supports signing the system information, and the UE obtains, from the system information #1, an identifier of a base station to which the cell 1 belongs. If the identifier of the base station of the cell 1 is the same as an identifier of the base station 1, the UE determines that the cell 1 supports signing the system information. This case is described as follows:

When the system information #1 does not carry the signature, the UE determines that the signing capability information does not match the case of whether the system information #1 carries the signature. In this case, the UE may determine that the cell 1 is a cell of a false base station, or the UE may determine that the cell 1 is untrusted.

In this case, in a first implementation, the UE does not measure signal strength of the cell 1, so that a resource required for measurement can be saved. In a second implementation, the UE measures signal strength of the cell 1, but does not report a measurement result of the cell 1 to the S-RAN. In a third implementation, the UE measures signal strength of the cell 1, and the UE reports a measurement result of the cell 1 to the S-RAN, where the measurement result carries signature check result indication information, and the signature check result indication information indicates that signature check of the cell 1 fails, the signature check result indication information indicates that the cell 1 is the cell of the false base station, the signature check result indication information indicates that the cell 1 is untrusted, or the signature check result indication information indicates that the cell 1 fails in signature check.

When the system information #1 carries the signature, the UE determines that the signing capability information matches the case of whether the system information #1 carries the signature. In this case, the UE measures signal strength of the cell 1 in S908, and then checks the signature in the system information #1 in S909.

If the signature check fails, the UE may determine that the cell 1 is a cell of a false base station, or the UE may determine that the cell 1 is untrusted. In this case, the UE may perform a similar solution based on the foregoing case in which the system information #1 does not carry the signature. Details are not described herein again.

If the signature check succeeds, and a measurement result of the cell 1 meets a reporting criterion, the UE reports a measurement report for the cell 1 to the S-RAN. Optionally, the UE may further report signature check result indication information to the S-RAN. The signature check result indication information may be included in the measurement report. The signature check result indication information indicates that the signature check of the cell 1 succeeds, or the signature check result indication information indicates that the cell 1 is trusted.

In another implementation, the signing capability information indicates that the candidate cell does not support signing the system information.

When the system information #1 carries the signature, the UE determines that the signing capability information does not match the case of whether the system information #1 carries the signature. In this case, the UE may determine that the cell 1 is a cell of a false base station, or the UE may determine that the cell 1 is untrusted. In this case, the UE may perform a similar solution based on the foregoing case in which the system information #1 does not carry the signature. Details are not described herein again.

When the system information #1 does not carry the signature, the UE determines that the signing capability information matches the case of whether the system information #1 carries the signature, and the UE measures signal strength of the cell 1. If a measurement result meets a reporting criterion, the UE reports a measurement report for the cell 1 to the S-RAN. In addition, the UE reports signature obtaining indication information to the S-RAN. The signature obtaining indication information indicates that the system information #1 for the cell 1 does not carry the signature, or the signature obtaining indication information indicates that signature check is not performed on the cell 1.

In another solution (denoted as a solution II), the UE first checks the signature of the candidate cell, and then measures the candidate cell.

S910: The UE checks the signature of the candidate cell.

S911: The UE measures the signal strength of the candidate cell.

S912: The UE reports a measurement report to the S-RAN.

The following describes S908 to S910 by using examples with reference to different cases.

In a possible implementation, the UE determines whether the signing capability information matches a case of whether the system information #1 carries a signature. Specifically, examples are as follows:

In an implementation, the UE determines, based on the signing capability information, that the cell 1 supports signing. This case is described as follows:

When the system information #1 does not carry the signature, the UE determines that the signing capability information does not match the case of whether the system information #1 carries the signature. In this case, the UE may determine that the cell 1 is a cell of a false base station, or the UE may determine that the cell 1 is untrusted. In this case, an implementation of the UE is similar to a solution performed when the system information #1 does not carry the signature in the solution I. Details are not described herein again.

When the system information #1 carries the signature, the UE determines that the signing capability information matches the case of whether the system information #1 carries the signature. In this case, the UE checks the signature of the cell 1 in S910.

If the signature check fails, the UE may determine that the cell 1 is a cell of a false base station, or the UE may determine that the cell 1 is untrusted. In this case, in a first implementation, the UE does not measure signal strength of the cell 1, so that a resource required for measurement can be saved. In a second implementation, the UE measures signal strength of the cell 1 in S911, but does not report a measurement report for the cell 1 to the S-RAN. In a third implementation, the UE measures signal strength of the cell 1, and the UE reports a measurement report for the cell 1 to the S-RAN, where the measurement report carries signature check result indication information, and the signature check result indication information indicates that signature check of the cell 1 fails, the signature check result indication information indicates that the cell 1 is the cell of the false base station, or the signature check result indication information indicates that the cell 1 is untrusted. If the signature check succeeds, the UE measures signal strength of the cell 1 in S911. If a measurement result of the cell 1 meets a reporting criterion, the UE reports a measurement report for the cell 1 to the S-RAN in S912. Optionally, the UE may further report signature check result indication information to the S-RAN. The signature check result indication information may be included in the measurement report. The signature check result indication information indicates that the signature check of the cell 1 succeeds, or the signature check result indication information indicates that the cell 1 is trusted.

In another implementation, the signing capability information indicates that the candidate cell does not support signing the system information.

When the system information #1 carries the signature, the UE determines that the signing capability information does not match the case of whether the system information #1 carries the signature. In this case, the UE may determine that the cell 1 is a cell of a false base station, or the UE may determine that the cell 1 is untrusted. In this case, the UE may perform a similar solution based on the foregoing case in which the system information #1 does not carry the signature. Details are not described herein again.

When the system information #1 does not carry the signature, the UE determines that the signing capability information matches the case of whether the system information #1 carries a signature, and the UE measures signal strength of the cell 1. If a measurement result meets a reporting criterion, the UE reports a measurement report for the cell 1 to the S-RAN. In addition, the UE reports signature obtaining indication information to the S-RAN. The signature obtaining indication information indicates that the system information #1 for the cell 1 does not carry the signature, or the signature obtaining indication information indicates that signature check is not performed on the cell 1.

S913: The S-RAN determines, based on the measurement report for the candidate cell, whether to perform cell handover on the UE.

It should be understood that S913 is similar to S811 in the solution B of the method 800. Details are not described herein again.

Based on the foregoing solution, the UE may determine, based on the case of whether the system information for the candidate cell carries the signature and the signing capability information of the candidate cell and/or a signature check result of the candidate cell, a candidate cell whose measurement result is to be reported to the base station, to prevent the base station from indicating the UE to hand over to the false base station, and improve communication security of the UE.

It should be understood that in some of the foregoing embodiments, some message names are involved, and the names do not limit the protection scope of embodiments of this application. In different scenarios, these messages may have other names.

It should be further understood that in some of the foregoing embodiments, a network element (such as a UE or a RAN) in an existing network architecture is mainly used as an example for description. It should be understood that a specific form of the network element is not limited in embodiments of this application. For example, all network elements that can implement a same function in the future are applicable to embodiments of this application. In addition, any architecture in which a service chain can be deployed in the future is applicable to embodiments of this application.

It should be further understood that specific examples shown in the method 300 to the method 900 in embodiments of this application are merely intended to help a person skilled in the art better understand embodiments of this application, but are not intended to limit the scope of embodiments of this application. For example, a procedure in a specific embodiment is mainly described by using a cell handover process as an example. It should be understood that this is not limited herein. For example, in any other scenario, the solutions in embodiments of this application may be used to prevent a UE from accessing a false base station.

Embodiments described in this specification may be independent solutions, or may be combined based on internal logic. All these solutions fall within the protection scope of this application.

It may be understood that, in the foregoing method embodiments, a method and an operation implemented by a network device (for example, a radio access network device/an S-RAN) may also be implemented by a component (for example, a chip or a circuit) that can be used in the network device, and a method and an operation implemented by a terminal device/UE may also be implemented by a component (for example, a chip or a circuit) that can be used in the terminal device/UE.

It should be understood that sequence numbers of the foregoing processes do not mean an execution order, and the execution order of the processes should be determined based on functions and internal logic of the processes, and should not be construed as any limitation on the implementation processes of the embodiments of this application.

It should be further understood that, in embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

The foregoing describes in detail the cell handover method provided in embodiments of this application with reference to FIG. 6 to FIG. 9. The foregoing cell handover method is mainly described from a perspective of interaction between network elements. It may be understood that to implement the foregoing functions, each network element includes a corresponding hardware structure and/or software module for performing each function.

A person skilled in the art should be aware that, with reference to units and algorithm steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In correspondence to the method provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that technical features described in the foregoing method embodiments are also applicable to the following apparatus embodiments. Therefore, for content that is not described in detail, refer to the foregoing method embodiments. For brevity, details are not described herein again.

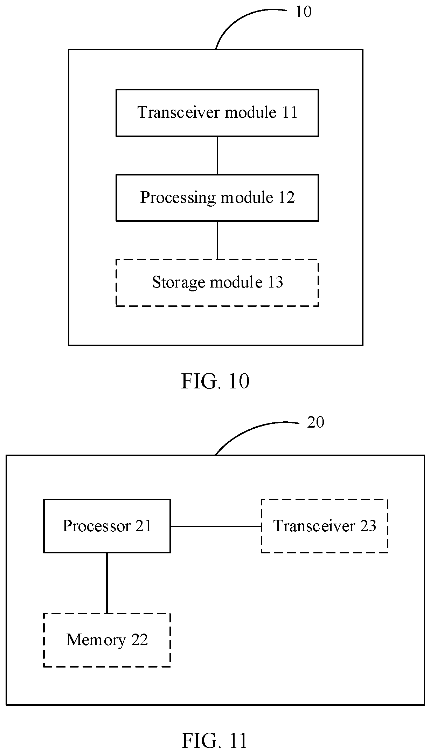

FIG. 10 is a block diagram of a cell handover apparatus according to an embodiment of this application. The apparatus 10 includes a transceiver module 11 and a processing module 12. The transceiver module 11 may be configured to implement a corresponding communication function. The transceiver module 11 may also be referred to as a communication interface or a communication unit. The processing module 12 may be configured to implement a corresponding processing function, for example, check a signature in system information.

Optionally, the apparatus 10 may further include a storage module 13. The storage module 13 may be configured to store instructions and/or data. The processing module 12 may read the instructions and/or the data in the storage module 13, to enable the apparatus to implement an action of the device or the network element in the foregoing method embodiments.

In a first design, the apparatus 10 may be the terminal device in the foregoing embodiments, or may be a component (for example, a chip) of the terminal device. The apparatus 10 may implement a corresponding step or procedure performed by the terminal device in the foregoing method embodiments. The transceiver module 11 may be configured to perform receiving and sending related operations of the terminal device in the foregoing method embodiments. The processing module 12 may be configured to perform a processing related operation of the terminal device in the foregoing method embodiments.

In a first possible implementation, the transceiver module 11 is configured to receive a physical layer parameter and system information for a candidate cell, where the system information includes an identifier of the candidate cell. The processing module 12 is configured to measure signal strength of the candidate cell based on the physical layer parameter, to obtain a measurement result. The transceiver module 11 is further configured to send a measurement report to an access network device, where the measurement report includes the measurement result and one or both of the following information: signature obtaining indication information and signature check result indication information, where the signature obtaining indication information indicates whether the system information carries a signature, the signature check result indication information indicates whether signature check succeeds, and the signature is used to verify whether the system information is forged or tampered with.

In a second possible implementation, the transceiver module 11 is configured to: receive signing capability information from an access network device, where the signing capability information indicates whether a candidate cell supports signing system information; and receive a physical layer parameter and the system information for the candidate cell, where the system information includes an identifier of the candidate cell. The processing module 12 is configured to: measure signal strength of the candidate cell based on the physical layer parameter, to obtain a measurement result; determine whether the signing capability information matches a case of whether the system information carries a signature; and when the signing capability information does not match the case of whether the system information carries the signature, skip sending the measurement result to the access network device.

In a second design, the apparatus 10 may be the radio access network device in the foregoing embodiments, or may be a component (for example, a chip) of the radio access network device. The apparatus 10 may implement a corresponding step or procedure performed by the radio access network device in the foregoing method embodiments. The transceiver module 11 is configured to perform receiving and sending related operations of the radio access network device in the foregoing method embodiments. The processing module 12 is configured to perform a processing related operation of the radio access network device in the foregoing method embodiments.

In a first possible implementation, the transceiver module 11 is configured to receive a measurement report for a candidate cell from a terminal device, where the measurement report includes a measurement result of signal strength of the candidate cell and one or both of the following information: signature obtaining indication information and signature check result indication information, where the signature obtaining indication information indicates whether system information for the candidate cell carries a signature, the signature check result indication information indicates whether signature check succeeds, and the signature is used to verify whether the system information for the candidate cell is forged or tampered with. The processing module 12 is configured to determine, based on the measurement report for the candidate cell, whether to hand over the terminal device from a serving cell to the candidate cell.

In a second possible implementation, the transceiver module 11 is configured to: send measurement configuration information and signing capability information to a terminal device, where the measurement configuration information includes an identifier of a candidate cell of the terminal device, and the signing capability information indicates whether the candidate cell supports signing system information; and receive a measurement report for the candidate cell from the terminal device. The processing module 12 is configured to determine, based on the measurement report of the terminal device, whether to hand over the terminal device from a serving cell to the candidate cell.

It should be understood that a specific process in which the units perform the foregoing corresponding steps is described in detail in the foregoing method embodiments. For brevity, details are not described herein.

It should be further understood that the apparatus 10 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically the terminal device in the foregoing embodiments, and may be configured to perform a procedure and/or a step corresponding to the terminal device in the foregoing method embodiments; or the apparatus 10 may be specifically the radio access network device in the foregoing embodiments, and may be configured to perform a procedure and/or a step corresponding to the radio access network device in the foregoing method embodiments. To avoid repetition, details are not described herein again.

The apparatus 10 in the foregoing solutions has a function of implementing a corresponding step performed by the terminal device or the radio access network device in the foregoing method. The function may be implemented by hardware, or may be implemented by hardware executing corresponding software. The hardware or the software includes one or more modules corresponding to the foregoing function. For example, a transceiver unit may be replaced by a transceiver (where for example, a sending unit in the transceiver unit may be replaced by a transmitter, and a receiving unit in the transceiver unit may be replaced by a receiver), and another unit, for example, a processing unit, may be replaced by a processor, to separately perform sending and receiving operations and a related processing operation in the method embodiments.

In addition, the transceiver module 11 may alternatively be a transceiver circuit (which, for example, may include a receiver circuit and a transmitter circuit), and the processing unit may be a processing circuit.

It should be noted that the apparatus in FIG. 10 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit that is integrated onto the chip. This is not limited herein.

As shown in FIG. 11, an embodiment of this application provides another cell handover apparatus 20. The apparatus 20 includes a processor 21. The processor 21 is configured to execute a computer program or instructions stored in the memory 22, or read data/signaling stored in the memory 22, to perform the method in the foregoing method embodiments. Optionally, there are one or more processors 21.

Optionally, as shown in FIG. 11, the apparatus 20 further includes a memory 22, and the memory 22 is configured to store a computer program or instructions and/or data. The memory 22 may be integrated with the processor 21, or may be disposed separately. Optionally, there are one or more memories 22.

Optionally, as shown in FIG. 11, the apparatus 20 further includes a transceiver 23, and the transceiver 23 is configured to receive and/or send a signal. For example, the processor 21 is configured to control the transceiver 23 to receive and/or send a signal.

In a solution, the apparatus 20 is configured to implement an operation performed by the terminal device or the radio access network device in the foregoing method embodiments.

For example, the processor 21 is configured to execute the computer program or the instructions stored in the memory 22, to implement a related operation of the terminal device in the foregoing method embodiments, for example, the method performed by the terminal device in the embodiment shown in FIG. 6 or FIG. 7, or the method performed by the UE in the embodiment shown in either of FIG. 8 and FIG. 9.

For another example, the processor 21 is configured to execute the computer program or the instructions stored in the memory 22, to implement related operations of the radio access network device in the foregoing method embodiments, for example, the method performed by the access network device in the embodiment shown in FIG. 6 or FIG. 7, or the method performed by the S-RAN in the embodiment shown in either of FIG. 8 and FIG. 9.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these memories and any other suitable type of memory.

An embodiment of this application further provides a computer-readable storage medium. The computer-readable storage medium stores computer instructions used to implement the method performed by the terminal device in the foregoing method embodiments.

An embodiment of this application further provides a computer-readable storage medium. The computer-readable storage medium stores computer instructions used to implement the method performed by the radio access network device in the foregoing method embodiments.

An embodiment of this application further provides a computer program product, including instructions. When the instructions are executed by a computer, the method performed by the terminal device or the radio access network device in the foregoing method embodiments is implemented.

An embodiment of this application further provides a communication system. The system includes the foregoing radio access network device, and optionally, may further include the foregoing terminal device.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, the foregoing module division is merely logical function division and there may be another division manner during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedures or the functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A cell handover method, comprising:
receiving, by a terminal device, a physical layer parameter and system information for a candidate cell, wherein the system information comprises an identifier of the candidate cell;
measuring, by the terminal device, signal strength of the candidate cell based on the physical layer parameter, to obtain a measurement result; and
sending, by the terminal device, a measurement report to an access network device, wherein the measurement report comprises the measurement result and one or both of the following information:
signature obtaining indication information and signature check result indication information, wherein the signature obtaining indication information indicates whether the system information carries a signature, the signature check result indication information indicates whether signature check succeeds, and the signature is used to verify whether the system information is forged or tampered with.

2. The method according to claim 1, wherein the method further comprises:
when the system information carries the signature, checking, by the terminal device, the signature.

3. The method according to claim 2, wherein
when the signature check succeeds, the measurement report comprises the measurement result and the signature check result indication information, and the signature check result indication information indicates that the signature check succeeds.

4. The method according to claim 2, wherein
when the signature check fails, the measurement report comprises the measurement result and the signature check result indication information, and the signature check result indication information indicates that the signature check fails.

5. The method according to claim 3 or 4, wherein the measurement report further comprises the signature obtaining indication information, and the signature obtaining indication information indicates that the system information carries the signature.

6. The method according to claim 1, wherein
when the system information does not carry the signature, the measurement report comprises the measurement result and the signature obtaining indication information, and the signature obtaining indication information indicates that the system information does not carry the signature.

7. The method according to any one of claims 1 to 6, wherein the method further comprises:
receiving, by the terminal device, signature check indication information from the access network device, wherein the signature check indication information indicates any one of the following:
the terminal device to check the signature carried in the received system information;
the terminal device to report a signature check result to the access network device;
that the access network device supports determining a cell handover policy based on a signature check result; or
that the access network device has been upgraded.

8. The method according to claim 7, wherein the method further comprises:
checking, by the terminal device based on the signature check indication information, whether the system information carries the signature.

9. A cell handover method, comprising:
receiving, by an access network device, a measurement report for a candidate cell from a terminal device, wherein the measurement report comprises a measurement result of signal strength of the candidate cell and one or both of the following information:
signature obtaining indication information and signature check result indication information, wherein the signature obtaining indication information indicates whether system information for the candidate cell carries a signature, the signature check result indication information indicates whether signature check succeeds, and the signature is used to verify whether the system information for the candidate cell is forged or tampered with; and
determining, by the access network device based on the measurement report for the candidate cell, whether to hand over the terminal device from a serving cell to the candidate cell.

10. The method according to claim 9, wherein when the measurement report comprises the measurement result and the signature obtaining indication information, the determining, by the access network device based on the measurement report for the candidate cell, whether to hand over the terminal device from a serving cell to the candidate cell comprises:
determining, by the access network device, whether the signature obtaining indication information matches signing capability information of the candidate cell, wherein the signing capability information indicates whether the candidate cell supports signing the system information; and
when the signature obtaining indication information matches the signing capability information, and the measurement result of the candidate cell meets a handover condition, determining, by the access network device, to hand over the terminal device from the serving cell to the candidate cell.

11. The method according to claim 10, wherein the determining, by the access network device, whether the signature obtaining indication information matches signing capability information of the candidate cell comprises one or more of the following cases:
when the signature obtaining indication information indicates that the system information carries the signature, and the signing capability information indicates that the candidate cell supports signing the system information, determining, by the access network device, that the signature obtaining indication information matches the signing capability information of the candidate cell;
when the signature obtaining indication information indicates that the system information does not carry the signature, and the signing capability information indicates that the candidate cell does not support signing the system information, determining, by the access network device, that the signature obtaining indication information matches the signing capability information of the candidate cell;
when the signature obtaining indication information indicates that the system information carries the signature, but the signing capability information indicates that the candidate cell does not support signing the system information, determining, by the access network device, that the signature obtaining indication information does not match the signing capability information of the candidate cell; or
when the signature obtaining indication information indicates that the system information does not carry the signature, but the signing capability information indicates that the candidate cell supports signing the system information, determining, by the access network device, that the signature obtaining indication information does not match the signing capability information of the candidate cell.

12. The method according to claim 10 or 11, wherein the method further comprises:
obtaining, by the access network device, the signing capability information of the candidate cell by using local configuration information; or
sending, by the access network device, a request message to a network management system, wherein the request message comprises an identifier of the candidate cell, and the request message is used to request to obtain the signing capability information corresponding to the candidate cell; and
receiving, by the access network device, a response message from the network management system, wherein the response message comprises the signing capability information.

13. The method according to any one of claims 9 to 12, wherein when the measurement report comprises the measurement result and the signature check result indication information, the determining, by the access network device based on the measurement report for the candidate cell, whether to hand over the terminal device from a serving cell to the candidate cell comprises:
when the signature check result indication information indicates that the signature check of the candidate cell succeeds, and the measurement result of the candidate cell meets the handover condition, determining, by the access network device, to hand over the terminal device from the serving cell to the candidate cell.

14. The method according to any one of claims 9 to 13, wherein the method further comprises:
sending, by the access network device, signature check indication information to the terminal device, wherein the signature check indication information indicates any one of the following:
the terminal device to check the signature carried in the received system information;
the terminal device to report a signature check result to the access network device;
that the access network device supports determining a handover policy for the candidate cell based on a signature check result; or
that the access network device has been upgraded.

15. A cell handover method, comprising:
receiving, by a terminal device, signing capability information from an access network device, wherein the signing capability information indicates whether a candidate cell supports signing system information;
receiving, by the terminal device, a physical layer parameter and the system information for the candidate cell, wherein the system information comprises an identifier of the candidate cell;
measuring, by the terminal device, signal strength of the candidate cell based on the physical layer parameter, to obtain a measurement result;
determining, by the terminal device, whether the signing capability information matches a case of whether the system information carries a signature; and
when the signing capability information does not match the case of whether the system information carries the signature, skipping, by the terminal device, sending the measurement result to the access network device.

16. The method according to claim 15, wherein the method further comprises:
when the system information carries the signature, checking, by the terminal device, the signature carried in the system information.

17. The method according to claim 15 or 16, wherein the determining, by the terminal device, whether the signing capability information matches a case of whether the system information carries a signature comprises:
when the signing capability information indicates that the candidate cell supports signing the system information, and the system information carries the signature, determining, by the terminal device, that the signing capability information matches the case of whether the system information carries the signature.

18. The method according to claim 17, wherein the method further comprises:
when the signing capability information matches the case of whether the system information carries the signature, and the signature check succeeds, sending, by the terminal device, the measurement result to the access network device.

19. The method according to claim 15 or 16, wherein the determining, by the terminal device, whether the signing capability information matches a case of whether the system information carries a signature comprises:
when the signing capability information indicates that the candidate cell does not support signing the system information, and the system information does not carry the signature, determining, by the terminal device, that the signing capability information matches the case of whether the system information carries the signature;
when the signing capability information indicates that the candidate cell supports signing the system information, but the system information does not carry the signature, determining, by the terminal device, that the signing capability information does not match the case of whether the system information carries the signature; or
when the signing capability information indicates that the candidate cell does not support signing the system information, but the system information carries the signature, determining, by the terminal device, that the signing capability information does not match the case of whether the system information carries the signature.

20. A cell handover method, comprising:
receiving, by a terminal device, a physical layer parameter and system information for a candidate cell, wherein the system information comprises a signature and an identifier of the candidate cell, and the signature is used to verify whether the system information is forged or tampered with;
measuring, by the terminal device, signal strength of the candidate cell based on the physical layer parameter, to obtain a measurement result;
checking, by the terminal device, the signature; and
when the signature check succeeds, sending, by the terminal device, the measurement result to an access network device.

21. The method according to claim 20, wherein the measurement result is carried in a measurement report, the measurement report further comprises signature check result indication information, and the signature check result indication information indicates that the signature check succeeds.

22. The method according to claim 20, wherein the method further comprises:
when the signature check fails, skipping, by the terminal device, sending the measurement result to the access network device.

23. The method according to any one of claims 20 to 22, wherein the method further comprises:
receiving, by the terminal device, signing capability information from the access network device, wherein the signing capability information indicates that the candidate cell supports signing the system information; and
the checking, by the terminal device, the signature comprises:
checking, by the terminal device, the signature based on the signing capability information.

24. The method according to any one of claims 20 to 22, wherein the method further comprises:
receiving, by the terminal device, signature check indication information from the access network device, wherein the signature check indication information indicates any one of the following:
the terminal device to check the signature carried in the received system information;
the terminal device to report a signature check result to the access network device;
that the access network device supports determining a handover policy for the candidate cell based on a signature check result; or
that the access network device has been upgraded.

25. The method according to claim 24, wherein the checking, by the terminal device, the signature comprises:
checking, by the terminal device, the signature based on the signature check indication information.

26. A cell handover method, wherein the method comprises:
sending, by an access network device, measurement configuration information and signing capability information to a terminal device, wherein the measurement configuration information comprises an identifier of a candidate cell of the terminal device, and the signing capability information indicates whether the candidate cell supports signing system information;
receiving, by the access network device, a measurement report for the candidate cell from the terminal device; and
determining, by the access network device based on the measurement report of the terminal device, whether to hand over the terminal device from a serving cell to the candidate cell.

27. The method according to claim 26, wherein the method further comprises:
receiving, by the access network device, the measurement report for the candidate cell and one or both of signature obtaining indication information and/or signature check result indication information from the terminal device, wherein the signature obtaining indication information indicates whether the system information for the candidate cell carries a signature, the signature check result indication information indicates whether signature check succeeds, and the signature is used to verify whether the system information for the candidate cell is forged or tampered with; and
the determining, by the access network device based on the measurement report of the terminal device, whether to hand over the terminal device from a serving cell to the candidate cell comprises:
determining, by the access network device based on the measurement report for the candidate cell and the signature obtaining indication information and/or the signature check result indication information, whether to hand over the terminal device from the serving cell to the candidate cell.

28. The method according to claim 27, wherein the determining, by the access network device based on the measurement report for the candidate cell and the signature obtaining indication information and/or the signature check result indication information, whether to hand over the terminal device from the serving cell to the candidate cell comprises:
determining, by the access network device, whether the signature obtaining indication information matches the signing capability information of the candidate cell, wherein the signing capability information indicates whether the candidate cell supports signing the system information; and
when the signature obtaining indication information matches the signing capability information, and the measurement report for the candidate cell meets a handover condition, determining, by the access network device, to hand over the terminal device from the serving cell to the candidate cell.

29. The method according to claim 28, wherein the determining, by the access network device, whether the signature obtaining indication information matches the signing capability information of the candidate cell comprises:
when the signature obtaining indication information indicates that the system information carries the signature, and the signing capability information indicates that the candidate cell supports signing the system information, determining, by the access network device, that the signature obtaining indication information matches the signing capability information of the candidate cell; or
when the signature obtaining indication information indicates that the system information does not carry the signature, and the signing capability information indicates that the candidate cell does not support signing the system information, determining, by the access network device, that the signature obtaining indication information matches the signing capability information of the candidate cell.

30. The method according to claim 27, wherein the determining, by the access network device based on the measurement report for the candidate cell and the signature obtaining indication information and/or the signature check result indication information, whether to hand over the terminal device from the serving cell to the candidate cell comprises:
when the signature check result indication information indicates that the signature check of the candidate cell succeeds, and the measurement report for the candidate cell meets a handover condition, determining, by the access network device, to hand over the terminal device from the serving cell to the candidate cell.

31. The method according to any one of claims 26 to 30, wherein the method further comprises: obtaining, by the access network device, the signing capability information of the candidate cell by using local configuration information or from a network management system.

32. A communication apparatus, wherein the apparatus comprises: a transceiver module, configured to receive a physical layer parameter and system information for a candidate cell, wherein the system information comprises an identifier of the candidate cell; and a processing module, configured to measure signal strength of the candidate cell based on the physical layer parameter, to obtain a measurement result, wherein the transceiver module is further configured to send a measurement report to an access network device, wherein the measurement report comprises the measurement result and one or both of the following information: signature obtaining indication information and signature check result indication information, wherein the signature obtaining indication information indicates whether the system information carries a signature, the signature check result indication information indicates whether signature check succeeds, and the signature is used to verify whether the system information is forged or tampered with.

33. The apparatus according to claim 32, wherein the processing module is further configured to: when the system information carries the signature, check, by a terminal device, the signature.

34. The apparatus according to claim 33, wherein when the signature check succeeds, the measurement report comprises the measurement result and the signature check result indication information, and the signature check result indication information indicates that the signature check succeeds.

35. The apparatus according to claim 34, wherein when the signature check fails, the measurement report comprises the measurement result and the signature check result indication information, and the signature check result indication information indicates that the signature check fails.

36. The apparatus according to claim 34 or 35, wherein the measurement report further comprises the signature obtaining indication information, and the signature obtaining indication information indicates that the system information carries the signature.

37. The apparatus according to claim 32, wherein when the system information does not carry the signature, the measurement report comprises the measurement result and the signature obtaining indication information, and the signature obtaining indication information indicates that the system information does not carry the signature.

38. The apparatus according to any one of claims 32 to 37, wherein the transceiver module is further configured to receive signature check indication information from the access network device, wherein the signature check indication information indicates any one of the following: the processing module to check the signature carried in the received system information; the transceiver module to report a signature check result to the access network device; that the access network device supports determining a cell handover policy based on a signature check result; or that the access network device has been upgraded.

39. The apparatus according to claim 38, wherein the processing module is further configured to check, based on the signature check indication information, whether the system information carries the signature.

40. A communication apparatus, wherein the apparatus comprises a transceiver module, configured to receive a measurement report for a candidate cell from a terminal device, wherein the measurement report comprises a measurement result of signal strength of the candidate cell and one or both of the following information: signature obtaining indication information and signature check result indication information, wherein the signature obtaining indication information indicates whether system information for the candidate cell carries a signature, the signature check result indication information indicates whether signature check succeeds, and the signature is used to verify whether the system information for the candidate cell is forged or tampered with; and a processing module, configured to determine, based on the measurement report for the candidate cell, whether to hand over the terminal device from a serving cell to the candidate cell.

41. The apparatus according to claim 40, wherein the processing module is specifically configured to determine whether the signature obtaining indication information matches signing capability information of the candidate cell, wherein the signing capability information indicates whether the candidate cell supports signing the system information; and when the signature obtaining indication information matches the signing capability information, and the measurement result of the candidate cell meets a handover condition, determine to hand over the terminal device from the serving cell to the candidate cell.

42. The apparatus according to claim 41, wherein that the processing module is specifically configured to determine whether the signature obtaining indication information matches signing capability information of the candidate cell comprises one or more of the following cases: when the signature obtaining indication information indicates that the system information carries the signature, and the signing capability information indicates that the candidate cell supports signing the system information, the processing module is configured to determine that the signature obtaining indication information matches the signing capability information of the candidate cell; when the signature obtaining indication information indicates that the system information does not carry the signature, and the signing capability information indicates that the candidate cell does not support signing the system information, the processing module is configured to determine that the signature obtaining indication information matches the signing capability information of the candidate cell; when the signature obtaining indication information indicates that the system information carries the signature, but the signing capability information indicates that the candidate cell does not support signing the system information, the processing module is configured to determine that the signature obtaining indication information does not match the signing capability information of the candidate cell; or when the signature obtaining indication information indicates that the system information does not carry the signature, but the signing capability information indicates that the candidate cell supports signing the system information, the processing module is configured to determine that the signature obtaining indication information does not match the signing capability information of the candidate cell.

43. The apparatus according to claim 41 or 42, wherein the processing module is further configured to obtain the signing capability information of the candidate cell by using local configuration information; or the transceiver module is further configured to send a request message to a network management system, wherein the request message comprises an identifier of the candidate cell, and the request message is used to request to obtain the signing capability information corresponding to the candidate cell; and the transceiver module is further configured to receive a response message from the network management system, wherein the response message comprises the signing capability information.

44. The apparatus according to any one of claims 40 to 43, wherein when the signature check result indication information indicates that the signature check of the candidate cell succeeds, and the measurement result of the candidate cell meets the handover condition, the processing module is specifically configured to determine to hand over the terminal device from the serving cell to the candidate cell.

45. The apparatus according to any one of claims 40 to 44, wherein the transceiver module is further configured to send signature check indication information to the terminal device, wherein the signature check indication information indicates any one of the following: the terminal device to check the signature carried in the received system information; the terminal device to report a signature check result to the apparatus; that the access network device supports determining a handover policy for the candidate cell based on a signature check result; or that the apparatus has been upgraded.

46. A communication apparatus, wherein the apparatus comprises:
a transceiver module, configured to: receive signing capability information from an access network device, wherein the signing capability information indicates whether a candidate cell supports signing system information; and receive a physical layer parameter and the system information for the candidate cell, wherein the system information comprises an identifier of the candidate cell; and
a processing module, configured to: measure signal strength of the candidate cell based on the physical layer parameter, to obtain a measurement result; determine whether the signing capability information matches a case of whether the system information carries a signature; and when the signing capability information does not match the case of whether the system information carries the signature, skip sending the measurement result to the access network device.

47. The apparatus according to claim 46, wherein the processing module is further configured to:
when the system information carries the signature, check the signature carried in the system information.

48. The apparatus according to claim 46 or 47, wherein the processing module is specifically configured to:
when the signing capability information indicates that the candidate cell supports signing the system information, and the system information carries the signature, determine that the signing capability information matches the case of whether the system information carries the signature.

49. The apparatus according to claim 48, wherein the transceiver module is further configured to:
when the signing capability information matches the case of whether the system information carries the signature, and the signature check succeeds, send the measurement result to the access network device.

50. The apparatus according to claim 46 or 47, wherein the processing module is specifically configured to:
when the signing capability information indicates that the candidate cell does not support signing the system information, and the system information does not carry the signature, determine that the signing capability information matches the case of whether the system information carries the signature;
when the signing capability information indicates that the candidate cell supports signing the system information, but the system information does not carry the signature, determine that the signing capability information does not match the case of whether the system information carries the signature; or
when the signing capability information indicates that the candidate cell does not support signing the system information, but the system information carries the signature, determine that the signing capability information does not match the case of whether the system information carries the signature.

51. A communication apparatus, wherein the apparatus comprises: a transceiver module, configured to receive a physical layer parameter and system information for a candidate cell, wherein the system information comprises a signature and an identifier of the candidate cell, and the signature is used to verify whether the system information is forged or tampered with; and a processing module, configured to measure signal strength of the candidate cell based on the physical layer parameter, to obtain a measurement result; and check the signature, wherein the transceiver module is further configured to: when the signature check succeeds, send the measurement result to an access network device.

52. The apparatus according to claim 51, wherein the measurement result is carried in a measurement report, the measurement report further comprises signature check result indication information, and the signature check result indication information indicates that the signature check succeeds.

53. The apparatus according to claim 51, wherein the processing module is further configured to: when the signature check fails, skip sending the measurement result to the access network device.

54. The apparatus according to any one of claims 51 to 53, wherein the transceiver module is further configured to receive signing capability information from the access network device, wherein the signing capability information indicates that the candidate cell supports signing the system information; and the processing module is specifically configured to check the signature based on the signing capability information.

55. The apparatus according to any one of claims 51 to 53, wherein the transceiver module is further configured to receive signature check indication information from the access network device, wherein the signature check indication information indicates any one of the following: to check the signature carried in the received system information; to report a signature check result to the access network device; that the access network device supports determining a handover policy for the candidate cell based on a signature check result; or that the access network device has been upgraded.

56. The apparatus according to claim 55, wherein the processing module is specifically configured to check the signature based on the signature check indication information.

57. A communication apparatus, wherein the apparatus comprises: a transceiver module, configured to: send measurement configuration information and signing capability information to a terminal device, wherein the measurement configuration information comprises an identifier of a candidate cell of the terminal device, and the signing capability information indicates whether the candidate cell supports signing system information; and receive a measurement report for the candidate cell from the terminal device; and a processing module, configured to determine, based on the measurement report of the terminal device, whether to hand over the terminal device from a serving cell to the candidate cell.

58. The apparatus according to claim 57, wherein the transceiver module is further configured to receive the measurement report for the candidate cell and one or both of signature obtaining indication information and/or signature check result indication information from the terminal device, wherein the signature obtaining indication information indicates whether the system information for the candidate cell carries a signature, the signature check result indication information indicates whether signature check succeeds, and the signature is used to verify whether the system information for the candidate cell is forged or tampered with; and the processing module is specifically configured to determine, based on the measurement report for the candidate cell and the signature obtaining indication information and/or the signature check result indication information, whether to hand over the terminal device from the serving cell to the candidate cell.

59. The apparatus according to claim 58, wherein the processing module is specifically configured to: determine whether the signature obtaining indication information matches the signing capability information of the candidate cell, wherein the signing capability information indicates whether the candidate cell supports signing the system information; and when the signature obtaining indication information matches the signing capability information, and the measurement report for the candidate cell meets a handover condition, determine to hand over the terminal device from the serving cell to the candidate cell.

60. The apparatus according to claim 59, wherein the processing module is specifically configured to: when the signature obtaining indication information indicates that the system information carries the signature, and the signing capability information indicates that the candidate cell supports signing the system information, determine that the signature obtaining indication information matches the signing capability information of the candidate cell; or when the signature obtaining indication information indicates that the system information does not carry the signature, and the signing capability information indicates that the candidate cell does not support signing the system information, determine that the signature obtaining indication information matches the signing capability information of the candidate cell.

61. The apparatus according to claim 58, wherein the processing module is specifically configured to: when the signature check result indication information indicates that the signature check of the candidate cell succeeds, and the measurement report for the candidate cell meets a handover condition, determine to hand over the terminal device from the serving cell to the candidate cell.

62. The apparatus according to any one of claims 57 to 61, wherein the processing module is further configured to obtain the signing capability information of the candidate cell by using local configuration information or from a network management system.

63. A communication apparatus, wherein the apparatus comprises a module configured to perform the method according to any one of claims 1 to 8, the method according to any one of claims 9 to 14, the method according to any one of claims 15 to 19, the method according to any one of claims 20 to 25, or the method according to any one of claims 26 to 31.

64. A communication apparatus, comprising:
a processor, configured to execute a computer program stored in a memory, to enable the apparatus to perform the method according to any one of claims 1 to 8, the method according to any one of claims 9 to 14, the method according to any one of claims 15 to 19, the method according to any one of claims 20 to 25, or the method according to any one of claims 26 to 31.

65. A computer program product, wherein the computer program product comprises instructions used to perform the method according to any one of claims 1 to 8, the method according to any one of claims 9 to 14, the method according to any one of claims 15 to 19, the method according to any one of claims 20 to 25, or the method according to any one of claims 26 to 31.

66. A computer-readable storage medium, wherein the computer-readable storage medium stores a computer program; and when the computer program is run on a computer, the computer is enabled to perform the method according to any one of claims 1 to 8, the method according to any one of claims 9 to 14, the method according to any one of claims 15 to 19, the method according to any one of claims 20 to 25, or the method according to any one of claims 26 to 31.
